# EUROPEAN PATENT SPECIFICATION

(11) **EP 4 483 592 B1**
(45) Date of publication and mention of the grant of the patent: **01.04.2026**
(21) Application number: 23712362.5
(22) Date of filing: 20.02.2023
(51) Int. Cl.: H04W 4/02, B60N 2/00, B60R 21/015, B60W 40/09, G01S 5/02, G01S 13/58, H04M 1/72457, H04M 1/72463, H04W 64/00, B60W 40/08, B60W 40/13

(54) **SYSTEM AND METHOD FOR CLASSIFYING AN OPERATIONAL MODE OF MOBILE COMMUNICATION DEVICES OR AN EVENT RELATED TO THE COMMUNICATION BETWEEN THE MOBILE COMMUNICATION DEVICES BASED ON SENSOR FUSION**
SYSTEM UND VERFAHREN ZUR KLASSIFIZIERUNG EINES BETRIEBSMODUS MOBILER KOMMUNIKATIONSVORRICHTUNGEN ODER EINES EREIGNISSES AUF SENSORFUSIONBASIS
SYSTÈME ET PROCÉDÉ DE CLASSIFICATION D'UN MODE DE FONCTIONNEMENT DE DISPOSITIFS DE COMMUNICATION MOBILES OU D'UN ÉVÉNEMENT LIÉ À LA COMMUNICATION ENTRE LES DISPOSITIFS DE COMMUNICATION MOBILES SUR LA BASE D'UNE FUSION DE CAPTEURS

(30) Priority: 24.02.2022 US 202217679204; 24.02.2022 US 202217679208; 24.02.2022 US 202217679210
(43) Date of publication of application: 01.01.2025
(73) Proprietor: Saverone 2014 Ltd., 4970602 Petah-Tikva (IL)
(72) Inventor: MEIDAN, Aviram, 5631202 Yehud-Monosson (IL); RICHTER, Yiftach, 4486400 Kochav Yair (IL); ALJADEFF, Daniel, 5555005 Kiriat Ono (IL)
(74) Representative: Pearl Cohen UK
(86) International application number: PCT/IL2023/050176
(87) International publication number: WO 2023/161922

(56) References cited:
- EP-B1- 2 939 133
- US-A1- 2016 205 238

## Description

### FIELD OF THE INVENTION

The present invention relates generally to the field of signal processing, and more particularly to using sensor fusion to classify signals of various types concerning mobile communication devices.

### BACKGROUND OF THE INVENTION

Automatically locating a mobile communication device within a defined volume is known in the art and has many applications. One known application refers to determining whether a mobile communication device is being used by a driver of a moving vehicle. Such a solution is described in U.S. Patent No. 10,075,581.

Further improvements to the localization of a mobile communication device within a defined volume have been described in U.S. Patent No. 10,557,917.

As mobile communication devices have several modes of operation as described hereinafter, it would be further advantageous to know, in addition to the location of the mobile communication device, also its mode of operation, in order to determine overall driving safety.

As mobile communication devices have several types of interaction events as described hereinafter, it would be further advantageous to know, in addition to the location of the mobile communication device, also its type of interaction event, in order to determine the overall driving safety.

In addition to the classification challenge, in order to achieve good location results, it is required to have the localization system calibrated. This is usually done during the installation of the phone location unit (PLU) in the vehicle. Over the calibration session, the PLU is instructed to locate the phone in several predetermined locations in a defined volume where the exact location (so-called "ground truth") is known and the gaps between the readings of the PLU and the actual locations are then factored in and used to calibrate the system. European patent publication EP 2 939 133 B1 (Intel Corp [US]), published on 24 October 2018, discloses computer-implemented methods, performed in a vehicle , of determining that a user (driver) is using a mobile device, by way of making a user-to-wireless device association, based on inputs from a plurality of sensors, indicative of the user device's location within the vehicle or outside of it. Based on that determination, corrective action is taken to disable certain functionalities of the user device such as texting, browsing the Internet, making / receiving a phone call, playing a game on the wireless device, etc. Likewise, United States patent application publication US 2016/205238 A1 (Abramson et al [US]), published on 14 July 2016, discloses methods performed in a vehicle, of context-based determination of interaction between a user of a mobile device and that mobile device - which may be prohibited by law (i.e texting), deploying AI/ML techniques.

Another challenge is how to ensure that the PLU is still calibrated post-installation and further ensure that it is possible in real-time to detect a calibration event which is an event that indicates that the PLU is no longer calibrated.

Similarly, it is desirable to be able to detect a maintenance event which is an event that indicates that something in the PLU is faulty to the extent that the gap between the actual PLU readings and expected PLU readings is outside calibration and that the PLU needs to be repaired.

### SUMMARY OF THE INVENTION

In order to address the aforementioned challenges, it has been suggested by the inventors of the present invention to introduce a sensor fusion approach to the aforementioned classification problem. In addition to the localization data received using known technologies, the plurality of sensors, internal to the mobile communication device or external to it, are used together to deduce the mode of operation or an event related to the mobile communication device.

Some embodiments of the present invention provide a system and a method for classifying the operational mode or an event related to at least one of a plurality of communication devices (e.g., PLU, smartphone, tablet, and the like), within a defined volume, based on at least one sensor, wherein said communication devices may comprise at least one phone location unit (PLU) and at least one mobile communication device (e.g., smartphone, tablet, laptop) wherein inside the defined volume there is at least one person interacting with the at least one mobile communication device, are provided herein.

The method may include the following steps: determining a position of the at least one mobile communication device relative to a frame of reference of the defined volume, based on at least one of: angle or phase of arrival, time of flight such as Round Trip Time (RTT) and Time Difference Of Arrival (TDOA), or received intensity of radio frequency (RF) signals transmitted by the at least one mobile communication device and received by the PLU located within the defined volume and comprising a transceiver and antennas and further configured to wirelessly communicate with the at least one mobile communication device;
obtaining at least one sensor measurement related to the at least one mobile communication device, from a sensor located on at least one of: the at least one mobile communication device, within the defined volume, or outside of the defined volume; and
using a computer processor to classify the operational mode of at least one of the communication devices, into one of a plurality of predefined operational modes or events, based on said position and the at least one sensor measurement.

According to some embodiments, the operational mode classification may further include information about a person interacting with the mobile communication device. For example, there is a significant difference if a mobile communication device used by a bus driver is in texting mode, or said mobile communication device is used by a passenger seated in a back seat of the vehicle.

Some embodiments of the present invention provide a system and a method for classifying the type of interaction event between a person and at least one mobile communication device within a defined volume, based on at least one sensor, are provided herein. The method may include the following steps: determining a position of the at least one mobile communication device relative to a frame of reference of the defined volume (e.g., a vehicle), based on at least one of: angle or phase of arrival, time of flight such as Round Trip Time (RTT) and Time Difference Of Arrival (TDOA), or received intensity of radio frequency (RF) signals transmitted by the at least one mobile communication device and received by a phone location unit located within the defined volume and comprising a transceiver and antennas and further configured to wirelessly communicate with the at least one mobile communication device; obtaining at least one sensor measurement related to the at least one mobile communication device, from a sensor located on at least one of: the at least one mobile communication device, within the defined volume, or outside of the defined volume; and using a computer processor to classify the type of interaction event between the person and the at least one mobile communication device into at least one of a plurality of predefined types of interaction events of the mobile communication device, based on the position and the at least one sensor measurement. According to some embodiments, the method may include repeating over time the obtaining at least one sensor measurement, to yield at least a one time series of sensor measurements.

According to some embodiments, the type of interaction event classification may further include information about a person interacting with the mobile communication device. For example, there is a significant difference if a mobile communication device used by a bus driver is in audio engagement, visual engagement, or audio-visual engagement.

Some embodiments of the present invention provide a system and a method for classifying the mode of calibration or maintenance event of a PLU located within a defined volume, based on at least one sensor. The method may include the following steps: determining a position of the at least one mobile communication device relative to a frame of reference of the defined volume (e.g., a vehicle), based on at least one of: angle or phase of arrival, time of flight such as Round Trip Time (RTT) and Time Difference Of Arrival (TDOA), or received intensity of radio frequency (RF) signals transmitted by the at least one mobile communication device and received by a phone location unit located within the defined volume and comprising a transceiver and antennas and further configured to wirelessly communicate with the at least one mobile communication device; obtaining at least one sensor measurement related to the at least one mobile communication device, from a sensor located on at least one of: the at least one mobile communication device, within the defined volume, or outside of the defined volume; and using a computer processor to classify the mode of calibration or maintenance event of the PLU into at least one of a plurality of predefined modes of calibration or maintenance events, based on the position and the at least one sensor measurement.

According to some embodiments of the present invention, the mode of either calibration or maintenance event may provide insight into whether the system should be recalibrated (either automatically or by the user) or whether it is necessary to have a technician sort out the failure. Either way, embodiments of the present invention alert the user that the PLU may not operate properly and cannot be relied upon.

Some embodiments of the present invention provide a non-transitory computer-readable medium for classifying an operational mode of at least one of a plurality of communication devices or an event related to the communication therebetween, based on at least one sensor and within a defined volume, wherein said communication devices may comprise at least one phone location unit (PLU) and at least one mobile communication device, wherein inside the defined volume there is at least one person interacting with the at least one mobile communication device, the computer-readable medium comprising a set of instructions that when executed may cause at least one computer processor to: determine a position of the at least one mobile communication device relative to a frame of reference of the defined volume, based on at least one of: angle or phase of arrival, time of flight, or received intensity of radio frequency (RF) signals transmitted by the at least one mobile communication device and received by a phone location unit located within the defined volume and comprising a transceiver and antennas and further configured to wirelessly communicate with the at least one mobile communication device; obtain at least one sensor measurement related to the at least one mobile communication device, from a sensor located on at least one of: the at least one mobile communication device, within the defined volume, or outside of the defined volume; and classify the operational mode of the at least one of the plurality of communication devices or the event related to the communication therebetween, into at least one of a plurality of predefined types of operational modes or events, based on the position and the at least one sensor measurement.

Some embodiments of the present invention provide a server for classifying an operational mode of at least one of a plurality of communication devices or an event related to the communication therebetween, based on at least one sensor and within a defined volume, wherein said communication devices may comprise at least one phone location unit (PLU) and at least one mobile communication device, wherein inside the defined volume there is at least one person interacting with the at least one mobile communication device, the server comprising: a network interface configured to receive, from the PLU, a position of the at least one mobile communication device relative to a frame of reference of the defined volume, based on at least one of: angle or phase of arrival, time of flight, or received intensity of radio frequency (RF) signals transmitted by the at least one mobile communication device and received by the phone location unit located within the defined volume and comprising a transceiver and antennas and further configured to wirelessly communicate with the at least one mobile communication device; a memory interface configured to store at least one sensor measurement related to the at least one mobile communication device, from a sensor located on at least one of: the at least one mobile communication device, within the defined volume, or outside of the defined volume; and a processing device configured to classify the operational mode of the at least one of the plurality of communication devices or the event related to the communication therebetween, into at least one of a plurality of predefined types of operational modes or events, based on the position and the at least one time series of sensor readings.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
**Figure 1** is a high-level block diagram illustrating a deployment of the system in accordance with embodiments of the present invention;
**Figure 2A** is a detailed block diagram illustrating an exemplary architecture of a mobile communication device in communication with a server in accordance with some embodiments of the present invention;
**Figure 2B** is a detailed block diagram illustrating an exemplary architecture of a phone location unit in accordance with some embodiments of the present invention;
**Figure 3A** is a high-level flowchart illustrating a method for classifying modes of operation of a mobile communication device in accordance with embodiments of the present invention;
**Figure 3B** is a high-level flowchart illustrating a method for classifying types of interaction event of a mobile communication device in accordance with embodiments of the present invention;
**Figure 3C** is a high-level flowchart illustrating a method for classifying the mode of calibration or maintenance event of the phone location unit in accordance with embodiments of the present invention;
**Figure 4A** is a graph showing an implementation of an N-dimensions classifier in accordance with some embodiments of the present invention; and
**Figure 4B** is a graph showing another implementation of an N-dimensions classifier in accordance with some embodiments of the present invention.

It will be appreciated that for simplicity and clarity of the illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE INVENTION

Prior to setting forth the detailed description of the invention, it may be helpful to provide herein definitions of certain terms that will be used hereinafter.

The terms "volume", "defined volume" or "closed volume" as used herein are defined as any well-defined volume with boundaries that can be set or detected. The volume is typically a vehicle such as a car, train, airplane, or ship, but can also be a motorbike or any other moving platform. The volume can also relate to a room such as a conference room, a theater, and the like. The defined volume herein is in contrast with an open space whose boundaries cannot be easily defined.

The term "mobile communication device" as used herein is defined as any electronic device which is small enough to be carried by a person and further has radio frequency (RF) wireless communication capabilities. The mobile communication device is typically a phone such as a smartphone, a smartwatch, a laptop, a tablet, or a game console. The mobile communication device may support audio calls or transmitting and receiving data and may or not have a touch screen.

The term "phone location unit" or PLU as used herein is defined as a hardware-based device typically including a set of RF receiving antennas placed in a known location within the defined volume, a receiver, and a computer processor. The PLU can locate a mobile communication device based on processing the RF signals received by its antennas.

The term "operational mode" as used herein, is defined as a generic term that may comprise the mode of operation of a mobile device and the calibration mode of a PLU.

The term "mode of operation" as used herein is defined as the mode of operation of the mobile communication device and may relate to the functionalities that are being carried out in a specific instant of time. Some modes of operation are listed herein by means of a non-exhaustive list: An "idle" mode is defined where the mobile communication device is turned on but does not have any application running in the foreground and does not have any of its I/O functionalities in an operative mode. A "calling" mode is defined as whenever an audio call of any type is taking place which requires the use of a microphone, speaker, or headphones. A "messaging" mode is defined as any use of an instant messaging application for sending an SMS, MMS, or any other type of instant message, including the use of any email application. A mode of "touching" is a mode when the user is using the touch screen in any way by using any of the applications currently in the foreground.

The term "type of interaction event" as used herein is defined as the type of interaction event between a person and at least one mobile communication device and may relate to the I/O functionalities of the mobile communication device that are being applied over a specific time segment. It should be noted that a "type of interaction event" between a person and a mobile communication device differs from a "mode of operation" of the mobile communication device in that an interaction event requires machine-user interaction to be recorded over time whereas a mode of operation does not require interaction at all and can be derived and deduced instantly. Furthermore, while a "mode of operation" is focused on the mobile communication device itself, the "type of interaction event" is further focused on the person and his or her activities.

Some types of interaction events are listed herein by means of a non-exhaustive list: A "non-engagement" type of interaction event is defined where the mobile communication device is turned on, but the person has no interaction with it via the I/O functionalities. An "audio engagement" type of interaction event is defined as whenever an audio call of any type is taking place which requires the use of a microphone, speaker, or headphones. Another type of "audio engagement" may only require the use of a speaker or headphones or audio operation (e.g., listening to a recorded message, podcast, etc.). A "visual engagement" type of interaction event is defined as any use of screen functionality such as browsing functionalities of the mobile communicating device, including the use of any email application. A type of interaction event "audiovisual" is when the person is identified as engaged in a video conference or interactive game. As the interaction event is monitored over time, some more specific types of interaction events can be identified as part of a pattern, such as "driving to work", and "picking up a child from nursery". These are more specific types of interaction events that may infer the activity of the bearer of the mobile communication device and not just the phone itself. Such an activity can also be referred to as a "routine activity" or a "non-routine activity". Thus, more insight can be derived from monitoring the interaction event with the mobile communication device over time.

The term "mode of calibration" as used herein is defined as the mode in which the PLU performs a calibration process in order to improve its location accuracy in a determined closed volume. The calibration may take into account HW and SW parameters of the PLU, the type and position of the antennas in the defined volume, parameters (e.g., gain, polarization) of the antennas, the type of the defined volume (e.g., car, bus, truck, room, etc.), RF link parameters (e.g., frequency, bandwidth, etc.) and the like. It should be noted that a calibration process is usually performed when the PLU location accuracy may be affected, and re-calibration may improve it. A calibration process may usually be a manual procedure performed by the user using an app on his or her smartphone or be performed by a service person or an automatic procedure either performed by the PLU itself or by a server connected to the PLU.

The term "maintenance event" as used herein is defined as the type of event indicative of faulty operation of the PLU which can be associated with faulty hardware, faulty software, improper setup data (e.g., calibration data), faulty installation, or a significant change in the defined volume. It should be noted that the term "calibration event" is usually a relatively minor event where the precision is affected, and re-calibration can usually be automatically either performed by the PLU itself or by a server connected to the PLU or be applied by the user using an app on his or her smartphone or be performed by a service person. On the other hand, a "maintenance event" is more severe and may involve faulty hardware and sorting it out may require a technician.

In the following description, various aspects of the present invention will be described. For purposes of explanation, specific configurations and details are set forth in order to provide a thorough understanding of the present invention. However, it will also be apparent to one skilled in the art that the present invention may be practiced without the specific details presented herein. Furthermore, well-known features may be omitted or simplified in order not to obscure the present invention.

Unless specifically stated otherwise, as apparent from the following discussions, it is appreciated that throughout the specification discussions utilizing terms such as "processing", "computing", "calculating", "determining", or the like, refer to the action and/or processes of a computer or computing system, or similar electronic computing device, that manipulates and/or transforms data represented as physical, such as electronic, quantities within the computing system's registers and/or memories into other data similarly represented as physical quantities within the computing system's memories, registers or other such information storage, transmission or display devices.

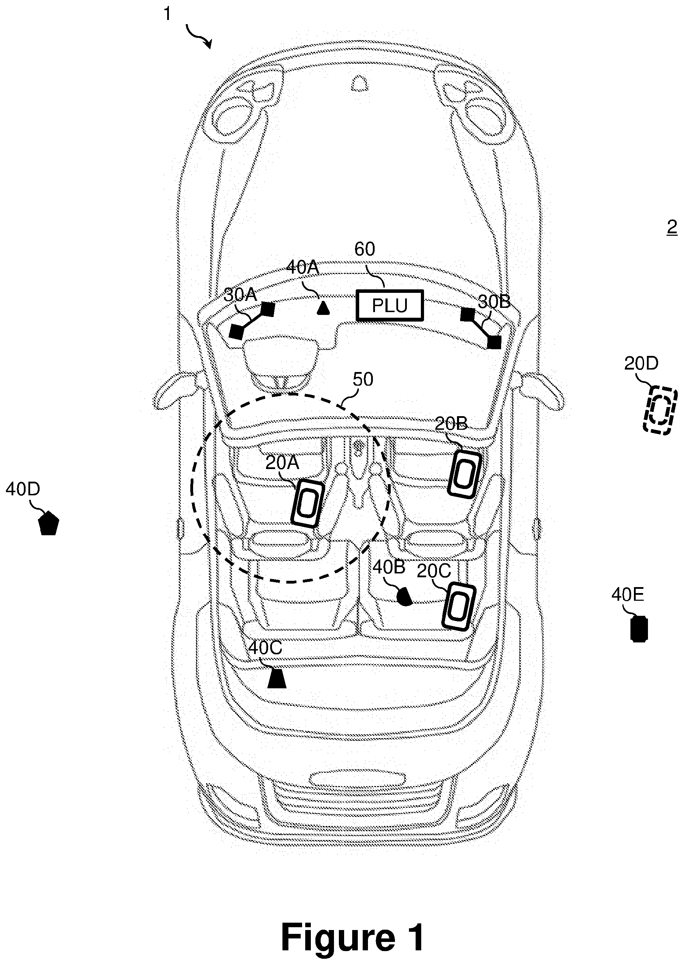

**Figure 1** is a block diagram illustrating a system for classifying an operational mode of at least one mobile communication device **20A-20C** within a defined or closed volume, such as car **1,** or an event affecting communication thereof based on data fusion derived from at least one sensor **40A, 40B, 40C, 40D, 40E** located either within or outside the defined volume or on various mobile communication devices located within or outside the defined volume.

According to some embodiments of the present invention, a phone location unit (PLU) **60** is located within the defined volume and is configured to determine the position of the at least one mobile communication device **20A-20C** relative to a frame of reference of defined volume **1** and specifically allows determining whether any of mobile communication devices **20A-20C** are located within an area defined as the driver's canopy **50**.

According to some embodiments of the present invention, the localization of the mobile communication device **20A-20C** by PLU **60** may be based on at least one of: angle or phase of arrival (e.g., using directional antennas, monopulse antennas, antenna arrays, etc.), time of flight (e.g., using UWB round trip time measurements), or received intensity of radio frequency (RF) signals transmitted by the at least one mobile communication device **20A-20C** and received by the PLU **60** which may include a transceiver (not shown) and at least two pairs of antennas **30A, 30B** and further configured to wirelessly communicate with the at least one mobile communication device **20A-20C.**

According to some embodiments of the present invention, the system may include a plurality of sensors **40A, 40B, 40C** which are either installed as part of car **1** or can be retrofitted once the system is installed on car **1.** The system may be configured to obtain at least one sensor measurement, possibly via a wireless communication with PLU **60**, such measurements being related to the at least one mobile communication device **20A-20C.** These sensors may be located on at least one of: the at least one mobile communication device **20A-20C,** within the defined volume **1,** for example, sensors **40A, 40B, 40C,** or outside **2** of the defined volume, for example, sensors **40D** and **40E** which can be sensors on mobile communication devices in other vehicles which are sufficiently close to the system and can communicate with it. In some embodiments, sensors **40D** and **40E** may be imaging sensors which are installed outside the vehicle, and which may provide information related to the mode of operation.

According to some embodiments, the defined volume **1** is any type of vehicle such as a car, train, airplane, or ship, but can also be a motorbike or any other moving platform.

Following below are several embodiments of the present invention which use the aforementioned infrastructure in order to deduce, using data fusion, various insights on the mobile communication devices withing the defined volume.

### Classifying a mode of operation of the mobile communication device

According to some embodiments of the present invention, the system may include a computer processor, or a computing device (not shown here) that may be configured to classify the at least one mobile communication device **20A-20C** into at least one of a plurality of predefined modes of operation of the mobile communication device, based on the calculated position and the at least one sensor reading. For example, an idle mode where the mobile communication device is turned on but does not have any application running in the foreground and does not have any of its I/O functionalities in an operative mode, a calling mode whenever an audio call of any type is taking place which requires the use of a microphone, speaker, headphones, a messaging mode as any use of an instant messaging application for sending an SMS, MMS, or any other type of instant message, including the use of any email application, a touching mode when the user is using the touch screen in any way by using any of the applications currently in the foreground.

According to some embodiments of the present invention, the classification by the computer processor may be carried out by assigning to the at least one mobile communication device a respective likelihood, to at least one mode of operation selected from a plurality of modes of operation.

According to some embodiments of the present invention, the system may obtain readings from at least two inertial measurement units (IMU) wherein at least one of the IMUs may be located on the at least one mobile communication device **20A-20C** and at least one of the IMUs may be located anywhere within the car such as on a vehicle IMU **40A** or alternatively an IMU of PLU **60**. The inertial sensors readings may be processed to yield a differential measurement which can be used to deduce the internal movement of the at least one mobile communication device **20A-20C** within the vehicle **1.**

According to some embodiments of the present invention, the position of the mobile communication unit within the defined volume may be further determined to be in the vehicle's driver area, wherein the obtaining at least one sensor measurement related to the at least one mobile communication device may be from a motion sensor **40A,** said sensor providing information related to the vehicle's speed and wherein the vehicle's speed may be factored in classifying the likelihood of the mode of operation, wherein for a mobile communication device located in the driver's area referred to as driver's canopy **50**, a higher speed may infer a higher probability of an idle mode of operation or a mode of operation not involving the manual intervention of the user (e.g., messaging mode). As may be apparent to the skilled in the art, the probability of a driver's smartphone being in messaging mode when a car is moving at a high speed will be typically smaller than the probability when moving at a low speed or parking).

In other cases, and according to some embodiments, the mobile communication device **20A-20C** may be located in the back seat area, and that may infer a lower probability of a phone call using a fixed cradle. A mobile communication device **20A-20C** on a fixed cradle (not shown) may be identified by correlating measurements from an inertial sensor in the mobile device **20C** and measurements from an inertial sensor in the vehicle **40A** and/or the phone location unit **60**. According to some embodiments of the present invention, inside the vehicle there is at least one person (not shown), and wherein the obtaining at least one sensor measurement related to the at least one mobile communication device may be from a proximity sensor, said proximity sensor providing information on the proximity between the at least one mobile communication device and the at least one person, and wherein the proximity may be factored in classifying the likelihood of the mode of operation, wherein a closer proximity may infer a higher probability of an on-call mode of operation. According to some embodiments, the mode of operation classification may further include information about a person interacting with the mobile communication device.

As may be apparent to one skilled in the art, the estimated location of the mobile communication device in the vehicle may affect the likelihood of one or more modes of operation. For example, the combination of the proximity sensor and a location far from the driver's area may infer that a phone call is being performed by a vehicle's passenger.

According to some embodiments of the present invention, inside the vehicle there is at least one person, and wherein the vehicle comprises at least one seat with a pressure sensor **40B** indicating that said seat is occupied by the at least one person, and wherein the obtaining at least one sensor measurement related to the at least one mobile communication device may be from a seat pressure sensor and wherein the seat pressure sensor indication may be factored in classifying the likelihood of the mode of operation, wherein a positive indication of a seat pressure sensor may infer a higher probability of a use of a mobile communication device by a person occupying that seat.

According to some embodiments, the estimated location of the mobile communication unit may be further combined with measurements from several sensor types. For example, seat pressure sensors indicating seat occupancy in both the driver's seat and a back seat in a car, together with an indication of proximity between the mobile communication device and a person and an estimated location in the front seats, may significantly increase the probability of a phone call being performed by a driver with a unit on-hand. According to some embodiments, the likelihood of this mode of operation can be further increased (or decreased) by using measurements from inertial sensors as previously disclosed.

According to some embodiments of the present invention, inside the vehicle there is at least one person, and wherein the at least one person is sensed by at least one vital signs sensor, and wherein the obtaining at least one sensor measurement related to the at least one mobile communication device may be from at least one vital signs sensor and wherein a vital signs measurement may be factored in classifying the likelihood of the mode of operation, wherein a level of vital signs outside (i.e., above or below) a certain threshold or limit may infer a higher probability of a non-idle mode of operation of the at least one mobile communication device. For example, and according to some embodiments, vital signs measurements which may include heart rate, and heart rate variability. For example, the standard deviation of all normal-to-normal R-R intervals-SDNN and root mean square of successive differences between normal-to-normal R-R intervals - (rMSSD data), blood pressure, respiration rate and pulse-respiration quotient (PRQ), sympathetic stress, parasympathetic activity, etc. may help in detecting some activities related to mobile phone usage such texting while driving, the distraction of the user (e.g., driver), etc.

According to some embodiments, the phone location unit may keep the history of measurements related to the driver's vital signs (e.g., average heart rate and heart rate variability) and may correlate them with new measurements. According to some embodiments, this correlation may allow better identification of the driver and increase the probability of operating modes related to the driver. When combined with measurements from other sensors (e.g., seat sensors), and the mobile communication unit location, special operating modes may be detected (e.g., a driver's distress mode using his phone to request assistance).

### Classifying a type of interaction event with mobile communication devices

According to some embodiments of the present invention, the computer processor, or a computing device (not shown here) may be further configured to classify the type of interaction event (e.g., a non-engagement type of interaction event where the mobile communication device is turned on, but the person has no interaction with it via the I/O functionalities, an audio engagement type of interaction event whenever an audio call of any type is taking place which requires the use of a microphone, speaker, headphones or an event which may only require the use of a speaker or headphones or audio operation, for example listening to a recorded message, podcast, etc., a visual engagement interaction event comprising any use of screen functionality such as browsing functionalities of the mobile communicating device, including the use of any email application, an audiovisual interaction event when the person is identified as engaged in a video conference or interactive game), of the person with at least one mobile communication device **20A-20C** into at least one of a plurality of predefined types of interaction events, based on the calculated position and the at least one sensor reading, preferably in times series form. As may be apparent to the skilled in the art, as the interaction event is monitored over time, some more specific types of interaction events can be identified as part of a pattern, such as "driving to work", and "picking up a child from nursery". These are more specific types of interaction events that may infer the activity of the bearer of the mobile communication device and not just the phone itself. Such an activity can also be referred to as a "routine activity" or a "non-routine activity".

According to some embodiments of the present invention, the classification by the computer processor may be carried out by assigning to the at least one mobile communication device a respective likelihood, to at least one type of interaction event selected from a plurality of types of interaction events.

According to some embodiments of the present invention, the system may obtain readings from at least two inertial measurement units (IMU) wherein at least one of the IMUs may be located on the at least one mobile communication device **20A-20C** and at least one of the IMUs may be located anywhere within the car such as on a vehicle IMU **40A** or alternatively an IMU of PLU **60**. The inertial sensors readings may be processed to yield a differential measurement which can be used to deduce the internal movement of the at least one mobile communication device **20A-20C** within the vehicle **1.**

According to some embodiments of the present invention, the position of the mobile communication unit within the defined volume may be further determined to be in the vehicle's driver area, wherein the obtaining at least one sensor measurement related to the at least one mobile communication device may be from a motion sensor **40A,** said sensor providing information related to the vehicle's speed and wherein the vehicle's speed may be factored in classifying the likelihood of the type of interaction event, wherein for a mobile communication device located in the driver's area referred to as driver's canopy **50**, a higher speed may infer a higher probability of non-engagement type of interaction event or a type of interaction event not involving the manual intervention of the user as in a visual engagement interaction event comprising any use of screen functionality.

In other cases, and according to some embodiments, the mobile communication device **20A-20C** may be located in the back seat area, and that may infer a lower probability of a phone call using a fixed cradle. A mobile communication device **20A-20C** on a fixed cradle (not shown) may be identified by correlating measurements from an inertial sensor in the mobile device **20C** and measurements from an inertial sensor in the vehicle **40A** and/or the phone location unit **60**.

According to some embodiments of the present invention, inside the vehicle there is at least one person, and wherein the obtaining at least one sensor measurement related to the at least one mobile communication device may be from a proximity sensor, said proximity sensor providing information on the proximity between the at least one mobile communication device and the at least one person, and wherein the proximity may be factored in classifying the likelihood of the type of interaction event, wherein a closer proximity may infer a higher probability of an audio engagement type of interaction event.

As may be apparent to one skilled in the art, the estimated location of the mobile communication device in the vehicle may affect the likelihood of one or more types of interaction events. For example, the combination of the proximity sensor and a location far from the driver's area may infer that an audio/visual engagement event is being performed by a vehicle's passenger.

According to some embodiments of the present invention, inside the vehicle may be at least one person, and wherein the vehicle comprises at least one seat with a pressure sensor **40B** indicating that said seat may be occupied by the at least one person, and wherein the obtaining at least one sensor measurement related to the at least one mobile communication device may be from a seat pressure sensor and wherein the seat pressure sensor indication is factored in classifying the likelihood of the type of interaction event, wherein a positive indication of a seat pressure sensor may infer a higher probability of engagement of a mobile communication device by a person occupying that seat.

According to some embodiments, the estimated location of the mobile communication unit may be further combined with measurements from several sensor types. For example, seat pressure sensors indicating seat occupancy in both the driver's seat and a back seat in a car, together with an indication of proximity between the mobile communication device and a person and an estimated location in the front seats, may significantly increase the probability of a phone call being performed by a driver with a unit on-hand. According to some embodiments, the likelihood of this type of interaction event can be further increased (or decreased) by using measurements from inertial sensors as previously disclosed.

According to some embodiments of the present invention, inside the vehicle may be at least one person, and wherein the at least one person may be sensed by at least one vital signs sensor, and wherein the obtaining at least one sensor measurement related to the at least one mobile communication device may be from at least one vital signs sensor and wherein a vital signs measurement is factored in classifying the likelihood of the type of interaction event, wherein a level of vital signs outside (i.e., above or below) a certain threshold or limit infers a higher probability of a non-idle type of interaction event of the at least one mobile communication device. For example, and according to some embodiments, vital signs measurements which may include heart rate, and heart rate variability. For example, the standard deviation of all normal-to-normal R-R intervals-SDNN and root mean square of successive differences between normal-to-normal R-R intervals - (rMSSD data), blood pressure (e.g., higher blood pressure and/or heart rate due to a text message or audio message), respiration rate and pulse-respiration quotient (PRQ), sympathetic stress, parasympathetic activity, etc. may help in detecting some activities related to mobile phone usage such texting while driving, the distraction of the user (e.g., driver), and the like.

According to some embodiments, the phone location unit may keep the history of measurements related to the driver's vital signs (e.g., average heart rate and heart rate variability) and may correlate them with new measurements. According to some embodiments, this correlation may allow better identification of the driver and increase the probability of interaction event types related to the driver. When combined with measurements from other sensors (e.g., seat sensors), and the mobile communication unit location, special interaction event types may be detected (e.g., a driver's distress mode using his or her phone to request assistance).

### Classifying the PLU mode of calibration or maintenance event within the volume.

According to some embodiments of the present invention, the system may further include a computer processor (not shown here) configured to classify at least one mode of calibration (the mode of calibration may take in account HW and SW parameters of the PLU, the type and position of the antennas in the defined volume, parameters, for example gain or polarization of the antennas, the type of the defined volume for example car, bus, truck, room, etc., the RF link parameters for example frequency, bandwidth, and the like) or maintenance event (e.g., an event indicative of faulty operation of the PLU which can be associated with faulty hardware, faulty software, improper setup data, faulty installation, or a significant change in the defined volume) of PLU **60** within the defined volume into at least one of a plurality of predefined modes of calibration or maintenance events, based on the position of the mobile communication device **20A-20C** and the at least one sensor measurement of sensors **40A, 40B, 40C**. As may be apparent to the skilled in the art, a calibration process is usually performed when the PLU location accuracy may be affected, and re-calibration may improve it. A calibration process may usually be a manual procedure performed by the user using an app on his or her smartphone or be performed by a service person or an automatic procedure either performed by the PLU itself or by a server connected to the PLU. According to some embodiments of the present invention, the classification by the computer processor may be carried out by analyzing gaps between at least one location of the mobile communication device as estimated by PLU **60** versus at least one estimated location of the mobile communication device derived from measurements of sensors **40A, 40B, 40C,** and assigning a respective likelihood, to at least one type of calibration or maintenance event selected from a plurality of modes of calibration or maintenance events.

According to some embodiments of the present invention, the mode of calibration or maintenance event may be related to at least one of: a detached or disconnected antenna **30A, 30B,** a mislocated antenna **30A, 30B,** a mismatched antenna, a faulty antenna or faulty cable, a faulty transceiver; and an obstructed or modified volume. It is understood that many other events requiring calibration and/or maintenance may be contemplated.

According to some embodiments of the present invention, the mode of calibration or maintenance event may include at least one of: an automatic recalibration performed by the PLU **60**, an automatic recalibration managed by a server connected to the PLU **60**, and transferring calibration data to the PLU, an assisted recalibration involving a user and an application in the mobile communication device **20A-20C,** a full recalibration of the PLU **60** performed by a service person, the installation of a new SW in the PLU **60**, a replacement of a faulty module (e.g., antenna **30A, 30B,** or unit (e.g., PLU **60**), the reinstallation of one or more mislocated antennas **30A, 30B,** the reconnection of a detached antenna **30A, 30B** and, changes in the volume required to improve the location accuracy (e.g., remove obstacles or obstructions). It is understood that many other modes of calibration and-or maintenance events may be contemplated.

According to some embodiments, automatic recalibration events may be performed periodically without the intervention of a user and/or a maintenance person.

According to some embodiments of the present invention, classifying the mode of calibration or maintenance event may comprise a plurality of positioning operations and a plurality of sensor measurements. According to some embodiments, said plurality of positioning operations and/or sensor measurements may generate more reliable data which may improve the type of mode or event classification. According to some embodiments, said classification process may involve algorithms using big data, filters, data from similar environments, historical data, installation data, and many other types of data that may improve the classification process.

According to some embodiments of the present invention, obtaining the sensor measurement related to the at least one mobile communication device may be from at least two inertial measurement units (IMU), wherein at least one of the IMU may be located on the mobile communication device and at least one of the IMUs may be located on the vehicle, and wherein a differential measurement of the IMU is used to deduce internal movement and the estimated position of the at least one mobile communication device within the vehicle and wherein the gap between said position and the mobile communication device position as estimated by the PLU using RF signals, may be used to classify the mode of calibration or maintenance event.

According to some embodiments of the present invention, the position of the mobile communication device **20A** within the defined volume may be further determined to be in the vehicle's driver area, wherein the obtaining at least one sensor measurement related to the at least one mobile communication device is from a motion sensor, said sensor providing information related to the vehicle's speed and wherein the vehicle's speed is factored in estimating the position of the mobile communication device **20A** within the defined volume, and wherein the gap or difference between said position and the mobile communication device position as estimated by the PLU using RF signals, is used to classify the mode of calibration or maintenance event.

According to some embodiments of the present invention, the obtaining at least one sensor measurement related to the at least one mobile communication device **20A** may be from a vital signs sensor, said vital signs sensor providing information on the level of physiological activity of the at least one person using the mobile communication device **20A**, and wherein the level of vital signs activity may be factored in estimating the position of the mobile communication device **20A** within the defined volume, and wherein the gap between said position and the mobile communication device position as estimated by the PLU using RF signals, may be used to classify the mode of calibration or maintenance event.

According to some embodiments of the present invention, the vehicle may comprise at least one seat with a pressure sensor **40B** indicating that said seat may be occupied by the at least one person, and wherein the obtaining at least one sensor measurement related to the at least one mobile communication device may be from a seat pressure sensor **40B** and, wherein the indication of a seat pressure sensor may be factored in estimating the position of the mobile communication device **20A** within the defined volume, and wherein the gap between said position and the mobile communication device position as estimated by the PLU using RF signals, may be used to classify the mode of calibration or maintenance event.

According to some embodiments of the present invention, the phone location unit is further connected to a server, and wherein the mode of calibration or maintenance event may comprise at least one of: an automatic recalibration performed by said phone location unit, an automatic recalibration managed by said server, wherein said server transfers calibration data to the phone location unit, an assisted recalibration involving a user or a service person, the installation of a new SW in the phone location unit, the replacement of a faulty module, the reinstallation of one or more mislocated antennas **30A, 30B,** the reconnection of a detached antenna **30A, 30B** and, changes in the volume.

According to some embodiments of the present invention, the mode of calibration event comprises a self-calibration mode in which the PLU is capable of carrying out a calibration session automatically. The self-calibration session may comprise an iterative process (i.e., requiring special PLU algorithms) that uses current location results to improve the calibration data. Performing this process continuously may significantly improve the location accuracy and event adapt the calibration data to dynamic changes in the defined volume.

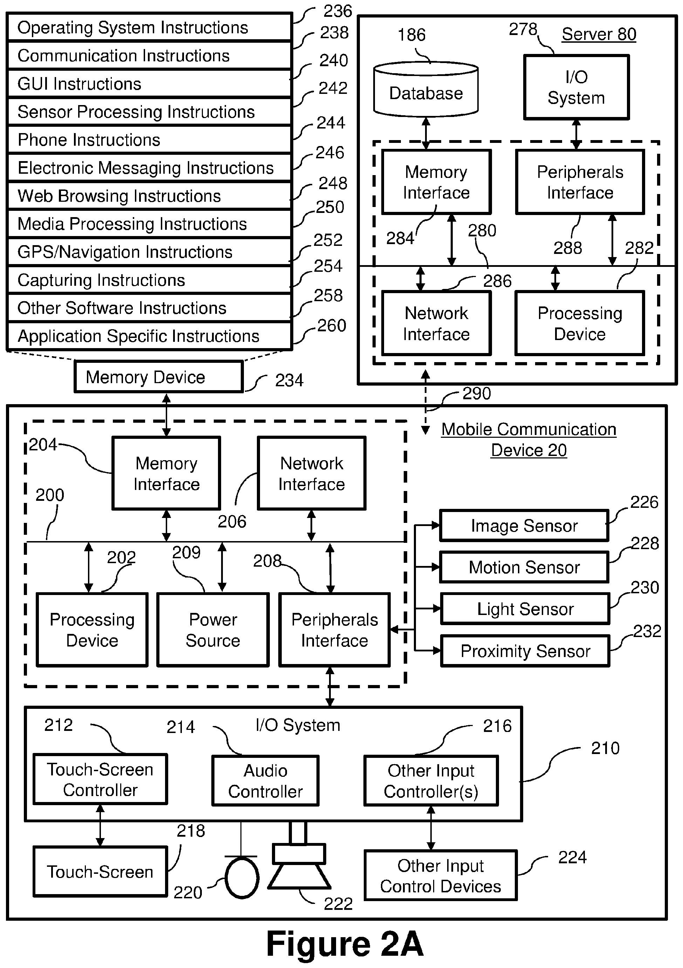

**Figure 2A** shows an exemplary block diagram of the configuration of a server **80** and a mobile communication device **20**. According to some embodiments of the present invention, a server **80** for classifying a mode of operation of at least one mobile communication device **20** within a defined volume, based on the mobile communication device position and at least one sensor, is illustrated herein.

In one embodiment, server **80**, directly or indirectly, may access a bus **280** (or another data transfer mechanism) that interconnects subsystems and components for transferring information within the server **80**. For example, the bus **280** may interconnect a processing device **282,** a memory interface **284,** a network interface **286,** and a peripherals interface **288** connected to an I/O system **278.** The server **80** may comprise a power source (not shown).

Server **80** may include a network interface **286** configured to receive, from a phone location unit **60** (not shown in **Figure 2A**), the position of the at least one mobile communication device **20** relative to a frame of reference of the defined volume, based on at least one of: angle or phase of arrival, time of flight, or received intensity of radio frequency (RF) signals transmitted by the at least one mobile communication device and received by the phone location unit located within the defined volume and comprising a transceiver and antennas and further configured to wirelessly communicate with the at least one mobile communication device.

Server **80** may further include an interface **284** to a memory configured to store at least one sensor measurement related to the at least one mobile communication device, from a sensor located on at least one of: the at least one mobile communication device, the phone location unit, within the defined volume, or outside of the defined volume.

The server **80** may further include a processing device **282** configured to classify the at least one mobile communication device **20** into at least one of a plurality of predefined modes of operation of the mobile communication device, based on the position and at least one sensor reading.

Processing device **282** may include at least one processor configured to execute computer programs, applications, methods, processes, or other software to perform embodiments described in the present disclosure. For example, the processing device may include one or more integrated circuits, microchips, microcontrollers, microprocessors, all or part of a central processing unit (CPU), graphics processing unit (GPU), digital signal processor (DSP), field-programmable gate array (FPGA), or other circuits suitable for executing instructions or performing logic operations. The processing device may include at least one processor configured to perform functions of the disclosed methods. The processing device may include single-core or multiple-core processors executing parallel processes simultaneously. In one example, the processing device may be a single-core processor configured with virtual processing technologies. The processing device may be implemented using a virtual machine architecture or other methods that provide the ability to execute, control, run, manipulate, store, etc., multiple software processes, applications, programs, etc. In another example, the processing device may include a multiple-core processor architecture (e.g., dual, quad-core, etc.) configured to provide parallel processing functionalities to allow a device associated with the processing device to execute multiple processes simultaneously. It is appreciated that other types of processor architectures could be implemented to provide the capabilities disclosed herein.

In some embodiments, processing device **282** may use a memory interface **284** to access data and a software product stored on a memory device or a non-transitory computer-readable medium or to access a data structure **186.** As used herein, a non-transitory computer-readable storage medium refers to any type of physical memory on which information or data readable by at least one processor can be stored. Examples include random access memory (RAM), read-only memory (ROM), volatile memory, nonvolatile memory, hard drives, CD ROMs, DVDs, flash drives, disks, any other optical data storage medium, a PROM, an EPROM, a FLASH-EPROM or any other flash memory, NVRAM, a cache, a register, any other memory chip or cartridge, and networked versions of the same. The terms "memory" and "computer-readable storage medium" may refer to multiple structures, such as a plurality of memories or computer-readable storage mediums located within the server **80**, or at a remote location. Additionally, one or more computer-readable storage mediums can be utilized in implementing a computer-implemented method. The term "computer-readable storage medium" should be understood to include tangible items and exclude carrier waves and transient signals.

According to some embodiments, the network interface **286** may provide two-way data communication to a network. In **Figure 2A****,** the communication **290** between the mobile communication device **20** and server **80** is represented by a dashed arrow. In one embodiment, the network interface **286** may include an integrated services digital network (ISDN) card, cellular modem, satellite modem, or a modem to provide a data communication connection over the Internet. As another example, the network interface **286** may include a wireless local area network (WLAN) card. In another embodiment, the network interface **286** may include an Ethernet port connected to radio frequency receivers and transmitters. The specific design and implementation of the network interface **286** may depend on the communications network(s) over which the mobile communication device **20** and the server **80** may communicate.

According to some embodiments, the server **80** may also include a peripherals interface **288** coupled to the bus **280**. The peripherals interface **288** may also be connected to devices, and subsystems to facilitate multiple functionalities as performed by the server **80**. In some embodiments, those devices and subsystems may comprise a display screen (e.g., CRT or LCD), a USB port, and the like.

With regard to the mobile communication device **20**, and according to some embodiments, the mobile communication device **20**, directly or indirectly, may access a bus **200** (or another data transfer mechanism) that interconnects subsystems and components for transferring information within the mobile communication device **20**. For example, bus **200** may interconnect a processing device **202**, a memory interface **204**, a network interface **206**, and a peripherals interface **208** connected to I/O system **210.** A power source **209** provides the power to the mobile communication device and it may include a primary or a rechargeable battery (not shown), DC-DC converters (not shown) and other components required for the proper operation of the device **20**.

Processing device **202** may include at least one processor configured to execute computer programs, applications, methods, processes, or other software to perform embodiments described in the present disclosure. For example, the processing device **202** may include one or more integrated circuits, microchips, microcontrollers, microprocessors, all or part of a central processing unit (CPU), graphics processing unit (GPU), digital signal processor (DSP), field-programmable gate array (FPGA), or other circuits suitable for executing instructions or performing logic operations. The processing device **202** may include at least one processor configured to perform functions of the disclosed methods. The processing device may include single-core or multiple-core processors executing parallel processes simultaneously. In one example, the processing device may be a single-core processor configured with virtual processing technologies. The processing device may be implemented using a virtual machine architecture or other methods that provide the ability to execute, control, run, manipulate, store, etc., multiple software processes, applications, programs, etc. In another example, the processing device may include a multiple-core processor architecture (e.g., dual, quad-core, etc.) configured to provide parallel processing functionalities to allow a device associated with the processing device to execute multiple processes simultaneously. It is appreciated that other types of processor architectures could be implemented to provide the capabilities disclosed herein.

In some embodiments, processing device **202** may use a memory interface **204** to access data and a software product stored on a memory device or a non-transitory computer-readable medium. For example, processing device **202** may use a memory interface **204** to access a memory device **234.** As used herein, a non-transitory computer-readable storage medium refers to any type of physical memory on which information or data readable by at least one processor can be stored. Examples include random access memory (RAM), read-only memory (ROM), volatile memory, nonvolatile memory, hard drives, CD ROMs, DVDs, flash drives, disks, any other optical data storage medium, a PROM, an EPROM, a FLASH-EPROM or any other flash memory, NVRAM, a cache, a register, any other memory chip or cartridge, and networked versions of the same. The terms "memory" and "computer-readable storage medium" may refer to multiple structures, such as a plurality of memories or computer-readable storage mediums located within mobile communication device **20** or at a remote location. Additionally, one or more computer-readable storage mediums can be utilized in implementing a computer-implemented method. The term "computer-readable storage medium" should be understood to include tangible items and exclude carrier waves and transient signals.

According to some embodiments, the network interface **206** may provide two-way data communication to a wireless network. In one embodiment, the network interface **206** may include an integrated services digital network (ISDN) card or module, cellular modem, satellite modem, or a modem to provide a data communication connection over the Internet. As another example, the network interface **206** may include a wireless local area network (WLAN) card or module. For example, in some embodiments, the network interface **206** is designed to operate over a Wi-Fi or Bluetooth^{®} network. In another embodiment, the network interface **206** may include an Ethernet port connected to radio frequency receivers and transmitters and in some embodiments also connected to optical (e.g., infrared) receivers and transmitters. The specific design and implementation of the network interface **206** may depend on the communications network(s) over which the mobile communication device **20** is intended to operate. In any such implementation, the network interface **206** may be configured to send and receive electrical, electromagnetic, or optical signals that carry digital data streams representing various types of information.

According to some embodiments, the peripherals interface **208** may also be connected to sensors, devices, and subsystems to facilitate multiple functionalities. In one embodiment, the peripherals interface **208** may be connected to an I/O system **210** configured to receive signals or input from devices and to provide signals or output to one or more devices that allow data to be received and/or transmitted by the mobile communication device **20**. In one example, the I/O system **210** may include a touch screen controller **212,** audio controller **214,** and/or other types of input controller(s) **216.** The touch screen controller **212** may be coupled to a touch screen **218.** The touch screen **218** and the touch screen controller **212** may, for example, detect contact, and movement, using any of a plurality of touch sensitivity technologies, including but not limited to capacitive, resistive, infrared, and surface acoustic wave technologies as well as other proximity sensor arrays or other elements for determining one or more points of contact with the touch screen **218.** The touch screen **218** may also, for example, be used to implement virtual or soft buttons and/or a keyboard. While a touch screen **218** is shown in **Figure 2A****,** I/O system **210** may include a display screen (e.g., LCD or LED) in place of a touch screen 218. The audio controller **214** may be coupled to a microphone **220** and to a speaker **222** to facilitate voice-enabled functions, such as voice recognition, voice replication, digital recording, and telephony functions. The other input controller(s) **216** may be coupled to other input/control devices **224,** such as one or more buttons, rocker switches, thumbwheel, infrared port, USB port, and/or a pointer device such as a stylus.

According to some embodiments, the peripherals interface **208** may also be connected to an image sensor **226,** a motion sensor **228,** a light sensor **230**, and/or a proximity sensor **232** to facilitate image capturing, orientation, lighting, and proximity functions. Other sensors (not shown) may also be connected to the peripherals interface **208**, such as a temperature sensor, a biometric sensor, or other sensing devices that facilitate related functionalities. In addition, a GPS receiver may also be integrated with, or connected to, the mobile communication device **20**, such as GPS receivers typically integrated into mobile communications devices. Alternatively, GPS software may permit the mobile communication device **20** to access an external GPS receiver (e.g., connecting via a serial port or Bluetooth).

Consistent with the present disclosure, the mobile communication device **20** may use a memory interface **204** to access a memory device **234.** The memory device **234** may include high-speed random-access memory and/or non-volatile memory such as one or more magnetic disk storage devices, one or more optical storage devices, and/or flash memory (e.g., NAND, NOR). The memory device **234** may store an operating system **236,** such as Android, iOS, MS Windows, Linux, or any other embedded operating system. The operating system **236** may include instructions for handling basic system services and for performing hardware-dependent tasks. In some implementations, the operating system **236** may be a kernel (e.g., Linux kernel).

The memory device **234** may also store communication instructions **238** to facilitate communicating with one or more additional devices, one or more computers, and/or one or more servers. The memory device **234** may include: graphical user interface instructions **240** to facilitate graphic user interface processing; sensor processing instructions **242** to facilitate sensor-related processing and functions; phone instructions **244** to facilitate phone-related processes and functions; electronic messaging instructions **246** to facilitate electronic-messaging-related processes and functions; web browsing instructions **248** to facilitate web browsing-related processes and functions; media processing instructions **250** to facilitate media processing-related processes and functions; GPS/navigation instructions **252** to facilitate GPS and navigation-related processes and instructions; capturing instructions **254** to facilitate processes and functions related to image sensor **226;** application-specific processing instructions **260** to facilitate application-specific processes and functions; and/or other software instructions **258** to facilitate other processes and functions.

Each of the above-identified instructions and applications may correspond to a set of instructions for performing one or more functions described above. These instructions do not necessarily need to be implemented as separate software programs, procedures, or modules. The memory device **234** may include additional instructions or fewer instructions. Furthermore, various functions of the mobile communication device **20** may be implemented in hardware and/or software, including in one or more signal processing and/or application-specific integrated circuits.

The components and arrangements shown in **Figure 2A** for both the server **80** and the mobile communication device **20** are not intended to limit the disclosed embodiments. As will be appreciated by a person skilled in the art having the benefit of this disclosure, numerous variations and/or modifications may be made to the depicted configuration of the server **80**. For example, not all the depicted components may be essential for the operation of server **80** in all cases. Any component may be located in any appropriate part of the server **80**, and the components may be rearranged into a variety of configurations while providing the functionality of the disclosed embodiments. For example, some servers may not include all the elements in I/O system **278.** Similarly, not all the depicted components may be essential for the operation of the mobile communication device **20** in all cases. For example, some types of mobile communication devices may include only part of the depicted sensors and include sensors which are not depicted.

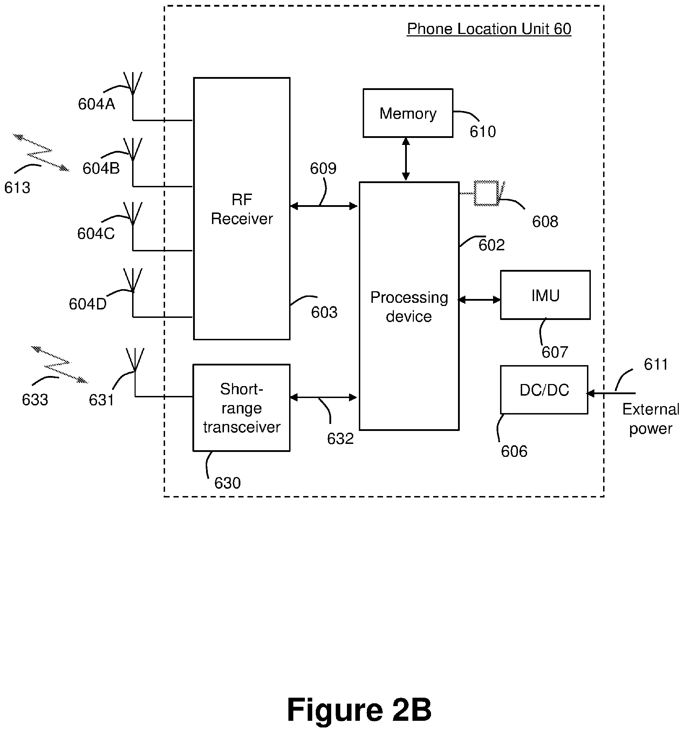

Referring now to **Figure 2B****,** the block diagram of an exemplary phone location unit **60** is depicted. In one embodiment, Phone Location Unit **60** may comprise a processing unit **602** which may control the Phone Location Unit **60**, at least one RF receiver **603** coupled **609** to the processing unit **602** and coupled to a plurality of antennas **604A-604D,** an inertial measurement unit (IMU) **607** such as an accelerometer, magnetometer or, gyroscope, a buzzer **608** for providing audio notifications, and a DC/DC converter **606** that may provide the required power to each of the Phone Location Unit **60** functions. The coupling **609** between the at least one RF receiver **603** and processing unit **602** may consist of a digital data bus, comprising sampled data from an Analog-to-Digital component (not shown) in the at least one RF receiver **603**. The A/D samples may be processed by the processing unit **602** to detect and locate the source of the wireless signals **613.** According to some embodiments, the processing unit **602** may also interface with a memory device **610.** The memory device **610** may include high-speed random-access memory and/or non-volatile memory such as one or more magnetic disk storage devices, one or more optical storage devices, and/or flash memory (e.g., NAND, NOR). The memory device **610** may store an operating system, such as Android, iOS, MS Windows, Linux, or any other embedded operating system. The operating system may include instructions for handling basic system services and for performing hardware-dependent tasks. In some implementations, the operating system may be a kernel (e.g., Linux kernel).

The memory device **610** may also store communication instructions to facilitate communicating with one or more additional devices, one or more computers, and/or one or more servers. The memory device **610** may include: graphical user interface instructions to facilitate graphic user interface processing; sensor processing instructions to facilitate sensor-related processing and functions; signal processing instructions to facilitate signal processing algorithms and functions; electronic messaging instructions to facilitate electronic-messaging related processes and functions; web browsing instructions to facilitate web browsing-related processes and functions; media processing instructions to facilitate media processing-related processes and functions; GPS/navigation instructions to facilitate GPS and navigation-related processes and instructions; and/or other software instructions to facilitate other processes and functions.

In one embodiment, the Analog-to-Digital (A/D) component is part of the at least one RF receiver **603** wherein analog signals are provided by the at least one RF receiver **603** through the coupling **609**. In one embodiment each coupling **609** may use a plurality of lanes (e.g., 2 lanes) in order to reduce the data rate at every single lane.

In some embodiments, the DC/DC converter may also be connected **611** to an external power source. According to one embodiment, the external power source is a vehicle's battery.

In one embodiment, a mobile communication device **20** (not shown) within a defined volume (e.g., vehicle's cabin) in which the antennas **604A-604D** are deployed and operative to receive wireless signals **613** transmitted by the mobile communication device **20**, may be located in a predetermined area (e.g., driver's seat area) inside the defined volume.

According to one embodiment, the antennas **604A-604D** may be installed in different places in the volume in order to create space diversity for the wireless signals **613** transmitted within the volume. The places in which those antennas **604A-604D** are installed may have a significant influence on the phone location unit **60** performance and to its ability to locate a mobile communication device **20** in a predetermined area (e.g., driver's seat area or passenger's area). According to one embodiment, the placement of the antennas **604A-604D** may be optimized to locate mobile communication devices **60** in the driver's seat area.

According to one embodiment, the Phone Location Unit **60** may further comprise an embedded short-range wireless link (e.g., an IEEE802.11a/b/g/n/p/ac/ad WLAN and/or BT/BLE transceiver) **630**. The short-range transceiver **630** may comprise an antenna **631** (internal or external) and may be connected **632** to the processing unit **602**. In one embodiment, the short-range transceiver **630** may communicate **633** with a mobile communication device in communication range. According to one embodiment, the short-range communication **633** may be performed through an IEEE802.11a/b/g/n/p/ac/ad Access Point, hub, gateway or the like (not shown).

In one embodiment, the at least one RF receiver **603** may be programmed to receive signals in the frequency band of the wireless signals **613** transmitted by the mobile communication device **20**. According to one embodiment, the at least one RF receiver **603** may be connected one at a time to each of the antennas **604A-604D**. This connection may be performed by an RF switch (not shown), typically with a low insertion loss and low noise figure. The architecture of the at least one RF receiver **603** may differ among different implementations of the Phone Location Unit **60**. In one embodiment, it may comprise a low noise amplifier (LNA), bandpass filters, a synthesizer, a mixer, an IQ demodulator, low pass filters, and analog-to-digital converters. The sampled baseband signals may be transferred **609** to a processing unit **602** to be further processed.

The processing unit **602** may the collection process until enough signal samples from each of the antennas **604A-604D** are collected in order to estimate the location of the mobile communication device **20** in the volume.

According to one embodiment of the present invention, the Phone Location Unit **60** may utilize one of the following methods, or any combination of them, to locate the position of the mobile communication device **20** in a defined volume and/or detect its presence in a predetermined area:
- Received Signal Strength Indicator (RSSI): Using the RSSI at each antenna to estimate the wireless device distance to that antenna and then using triangulation techniques. This method may utilize the ratio of the RSSI at each antenna pair **604A-604D.**
- Channel fingerprinting: Generating a radio map of the volume comprising RF-parameters signatures at each of the antennas **604A-604D.** Then estimating the mobile communication device position by correlating measured values of RF parameters at each antenna to fingerprints values in the radio map. Fingerprinting methods may utilize Power Level (RSSI) based methods, the phase difference between antennas, and Delay-spread based methods.
- Time Differential-Of-Arrival (TDOA): Estimating the position of the mobile communication device **20** by multilateration of hyperbolae. For example, the Phone Location Unit **60** may comprise four antennas and two RF receivers, wherein the two RF receivers are selectively connected to a pair of antennas for a TDOA measurement.
- Round-Trip time (RTT): Estimating the position of the mobile communication device **20** by multilateration of circles. For example, the Phone Location Unit **60** may comprise four antennas and one RF transceiver, wherein the RF transceiver is selectively connected to an antenna **604A-604D** for an RTT measurement.
- Angle-Of-Arrival (AOA) / Direction-Of-Arrival (DOA) technology: Estimating the angle or phase of arrival at each of the antennas of wireless signals **613** transmitted by the mobile communication device and then using this information to locate the device.

The above-described networks can be implemented in a packet-based network, a circuit-based network, and/or a combination of a packet-based network and a circuit-based network. Packet-based networks can include, for example, the Internet, a carrier internet protocol (IP) network (e.g., local area network (LAN), wide area network (WAN), campus area network (CAN), metropolitan area network (MAN), home area network (HAN), a private IP network, an IP private branch exchange (IPBX), a wireless network (e.g., radio access network (RAN), IEEE802.11a/b/g/n/p/ac/ad network, IEEE802.15.4, IEEE802.16 network, general packet radio service (GPRS) network, HiperLAN), and/or other packet-based wireless networks, a wireless network (e.g., RAN, Bluetooth^{®}, code-division multiple access (CDMA) network, time division multiple access (TDMA) network, global system for mobile communications (GSM) network, EDGE, and GPRS), 3G, LTE, 5G or 6G, and/or other circuit-based networks.

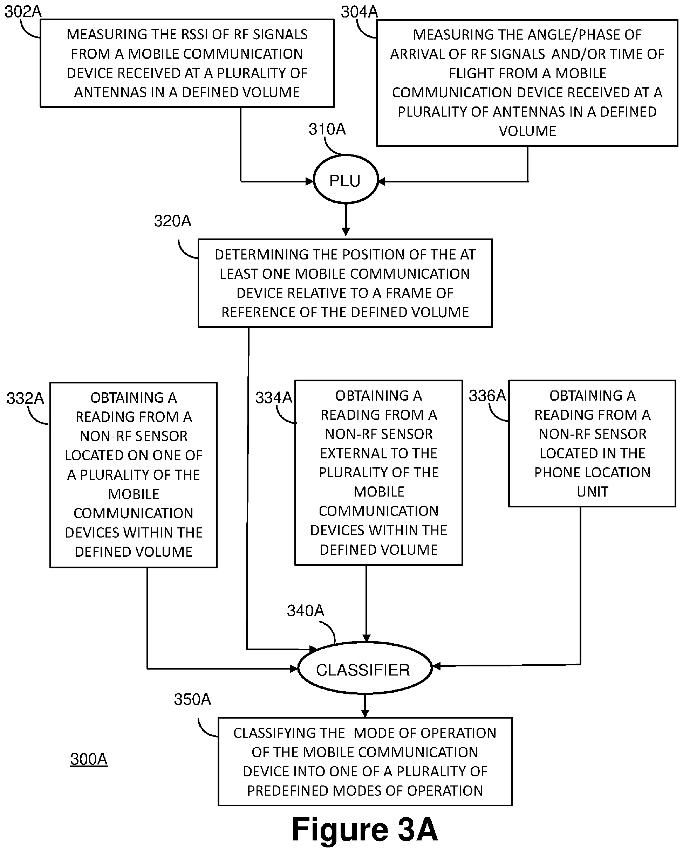

**Figure 3A** is a high-level flowchart **300A** illustrating a method for classifying the mode of operation of a mobile communication device in accordance with embodiments of the present invention. Step **302A** includes measuring by a PLU, the RSSI of RF signals from a mobile communication device received at a plurality of antennas in a defined volume. Step **304A** includes measuring by a PLU, the phase of arrival and/or the time of arrival of RF signals from a mobile communication device received at a plurality of antennas in a defined volume. These steps may occur simultaneously or can be sequential steps. According to some embodiments, only one of those steps **302A, 304A** may be performed (e.g., in accordance with the HW capabilities of the PLU). The measurements are processed by a PLU **310A** leading to step **320A** which includes determining the position of the at least one mobile communication device relative to a frame of reference of the defined volume.

Step **332A** may include obtaining the reading from a non-RF sensor located on one of a plurality of the mobile communication devices within the defined volume. Step **334A** may include obtaining a reading from a non-RF sensor (i.e., a non-RF sensor does not use RF signals for its sensing operation but can use RF signals to communicate and transfer its measurements to another device) external to the plurality of the mobile communication devices within the defined volume. Step **336A** may include obtaining a reading from a non-RF sensor located in the Phone Location Unit.

These steps may occur simultaneously or in any order, wherein in some cases, only a subset of them may occur.

Some or all of the readings of the sensors of steps **332A, 334A,** and **336A,** together with the position as calculated by the PLU at step **320A**, are fed into a classifier **340A**, leading to step **350A** which includes classifying the mode of operation of the mobile communication device into one of a plurality of predefined modes of operation.

According to some embodiments of the present invention, the classification by the classifier may be carried out by assigning to the at least one mobile communication device a respective probability to at least one mode of operation selected from a plurality of modes of operation. According to some embodiments, the classification algorithm may assign a probability to a plurality of predefined modes of operation and then select the one that has the highest probability. According to some embodiments, this classification may involve history measurements and classifications, user behavior, and other parameters.

According to some embodiments of the present invention, the modes of operation may comprise at least one of: idle, on-call, sending a text message, audio input, touch screen in use, and streaming data. According to some embodiments, the mode of operation classification may further include information about a person interacting with the mobile communication device. For example, there is a significant difference if a mobile communication device located in the bus driver's seat is in texting mode or idle mode.

According to some embodiments of the present invention, the obtaining at least one sensor measurement related to the at least one mobile communication device may be from a motion sensor, said sensor providing information related to the vehicle's speed and wherein the vehicle's speed may be factored in classifying the likelihood of the mode of operation, wherein for a mobile communication device located in the driver's area, a higher speed may infer a higher probability of idle mode of operation or a mode of operation not involving the manual intervention of the user. According to some embodiments of the present invention, inside the vehicle there is at least one person, and wherein the obtaining at least one sensor measurement related to the at least one mobile communication device may be from a proximity sensor, said proximity sensor providing information on the proximity between the at least one mobile communication device and the at least one person, and wherein the proximity may be factored in classifying the likelihood of the mode of operation, wherein a closer proximity may infer a higher probability of an on-call mode of operation.

According to some embodiments of the present invention, inside the vehicle, there is at least one person, and wherein the vehicle may comprise at least one seat with a pressure sensor indicating that said seat may be occupied by the at least one person, and wherein the obtaining at least one sensor measurement may be related to the at least one mobile communication device is from a seat pressure sensor and wherein the seat pressure sensor indication may be factored in classifying the likelihood of the mode of operation, wherein a positive indication of a seat pressure sensor may infer a higher probability of a use of a mobile communication device by a person occupying that seat.

According to some embodiments of the present invention, inside the vehicle there is at least one person, and wherein the at least one person may be sensed by at least one vital signs sensor, and wherein the obtaining at least one sensor measurement related to the at least one mobile communication device may be from at least one vital signs sensor and wherein a vital signs measurement may be factored in classifying the likelihood of the mode of operation, wherein a level of vital signs outside (e.g., above or below) a certain threshold or limit may infer a higher probability of a non-idle mode of operation of the at least one mobile communication device.

According to some embodiments of the present invention, the inventors have discovered that while sensor fusion of the non-RF sensors can be used in order to improve the accuracy of the positioning of the mobile communication device within the volume, the sensor fusion can be used together with the positioning of the PLU in order to classify the mobile communication device into a plurality of pre-defined modes of operation. This can be done either by classic classifiers or by using machine learning techniques that involve training a model with datasets.

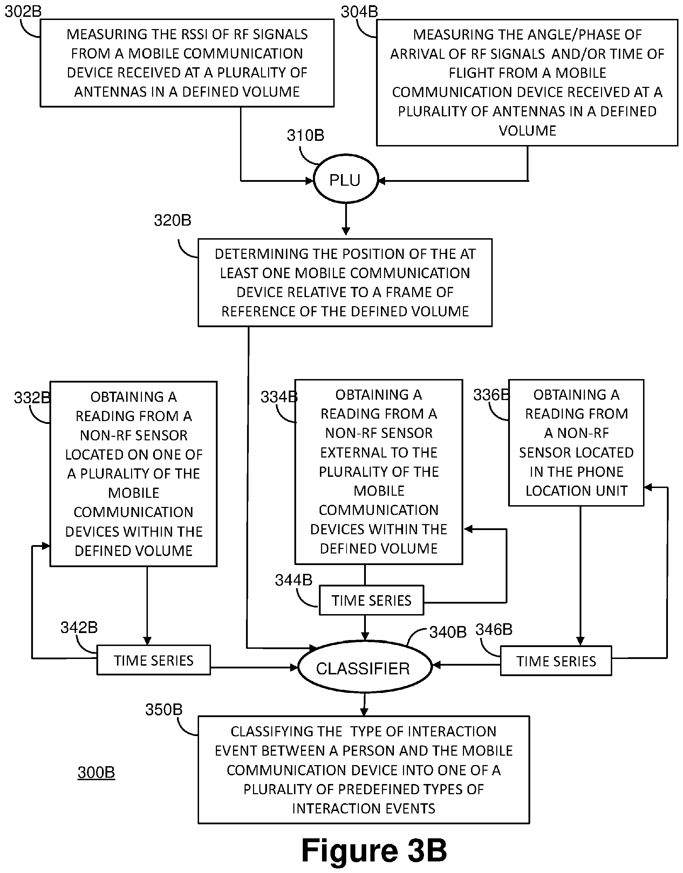

**Figure 3B** is a high-level flowchart **300B** illustrating a method for classifying the type of interaction event of a mobile communication device in accordance with embodiments of the present invention. Step **302B** includes measuring by a PLU, the RSSI of RF signals from a mobile communication device received at a plurality of antennas in a defined volume. Step **304B** includes measuring by a PLU, the angle or phase of arrival and/or the time of arrival of RF signals from a mobile communication device received at a plurality of antennas in a defined volume. These steps may occur simultaneously or can be sequential steps. According to some embodiments, only one of those steps **302B, 304B** may be performed (e.g., in accordance with the HW capabilities of the PLU). The measurements are processed by a PLU **310B** leading to step **320B** which includes determining the position of the at least one mobile communication device relative to a frame of reference of the defined volume.

Step **332B** may include obtaining the reading from a non-RF sensor located on one of a plurality of the mobile communication devices within the defined volume. Step **332B** is repeated over time to yield time series **342B** of the readings. Step **334B** may include obtaining a reading from a non-RF sensor (i.e., a non-RF sensor does not use RF signals for its sensing operation but can use RF signals to communicate and transfer its measurements to another device) external to the plurality of the mobile communication devices within the defined volume. Step **334B** is repeated over time to yield time series **344B** of the readings. Step **336B** may include obtaining a reading from a non-RF sensor located in the Phone Location Unit. Step **336B** is repeated over time to yield time series **346B** of the readings These steps may occur simultaneously or in any order, wherein in some cases, only a subset of them may occur.

Some or all of the readings of the sensors of steps **332B, 334B,** and **336B,** and their respective time series **342B, 344B,** and **346B,** together with the position as calculated by the PLU at step **320B,** are fed into a classifier **340B,** leading to step **350B** which includes classifying the type of interaction event of the mobile communication device into one of a plurality of predefined types of interaction events.

According to some embodiments of the present invention, the classification by the classifier may be carried out by assigning to the at least one mobile communication device a respective probability to at least one type of interaction event selected from a plurality of types of interaction events. According to some embodiments, the classification algorithm may assign a probability to a plurality of predefined types of interaction events and then select the one that has the highest probability. According to some embodiments, this classification may involve history measurements and classifications, user behavior, and other parameters.

According to some embodiments of the present invention, the types of interaction events may comprise at least one of: no engagement, audio engagement, visual engagement, audio-visual engagement; routine activity; and non-routine activity.

According to some embodiments, the type of interaction event classification further includes information about a person interacting with the mobile communication device. For example, there is a significant difference if a mobile communication device in audio-visual engagement is interacting with a bus driver, or a passenger seated in a back seat.

According to some embodiments of the present invention, the obtaining at least one sensor measurement related to the at least one mobile communication device may be from a motion sensor, said sensor providing information related to the vehicle's speed and wherein the vehicle's speed may be factored in classifying the likelihood of the type of interaction event, wherein for a mobile communication device located in the driver's area, a higher speed may infer a higher probability of no engagement type of interaction event or a type of interaction event not involving the manual intervention of the user.

According to some embodiments of the present invention, inside the vehicle there is at least one person, and wherein the obtaining at least one sensor measurement related to the at least one mobile communication device may be from a proximity sensor, said proximity sensor providing information on the proximity between the at least one mobile communication device and the at least one person, and wherein the proximity may be factored in classifying the likelihood of the type of interaction event, wherein a closer proximity may infer a higher probability of an on-call type of interaction event.

According to some embodiments of the present invention, inside the vehicle, there is at least one person, wherein the vehicle comprises at least one seat with a pressure sensor indicating that said seat may be occupied by the at least one person, and wherein the obtaining at least one sensor measurement related to the at least one mobile communication device may be from a seat pressure sensor and wherein the seat pressure sensor indication may be factored in classifying the likelihood of the type of interaction event, wherein a positive indication of a seat pressure sensor may infer a higher probability of a use of a mobile communication device by a person occupying that seat.

According to some embodiments of the present invention, inside the vehicle there is at least one person, and wherein the at least one person may be sensed by at least one vital signs sensor, and wherein the obtaining at least one sensor measurement related to the at least one mobile communication device may be from at least one vital signs sensor and wherein a vital signs measurement may be factored in classifying the likelihood of the type of interaction event, wherein a level of vital signs outside (e.g., above or below) a certain threshold or limit may infer a higher probability of a non-idle type of interaction event of the at least one mobile communication device. According to some embodiments of the present invention, the inventors have discovered that while sensor fusion of the non-RF sensors can be used in order to improve the accuracy of the positioning of the mobile communication device within the volume, the sensor fusion can be used together with the positioning of the PLU in order to classify the mobile communication device into a plurality of predefined types of interaction events. This can be done either by classic classifiers or by using machine learning techniques that involve training a model with datasets.

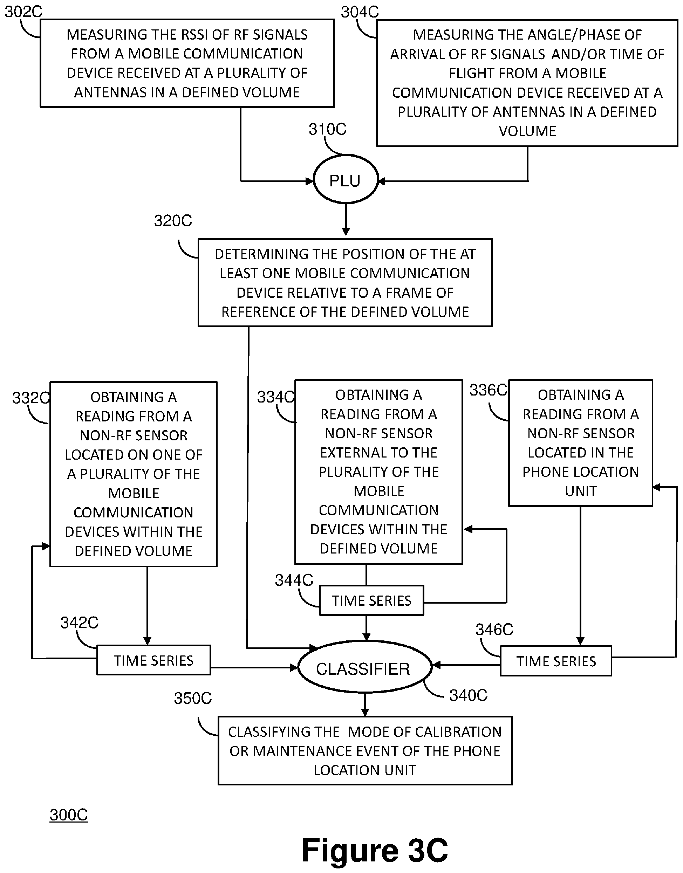

**Figure 3C** is a high-level flowchart **300C** illustrating a method for classifying the type of calibration or maintenance event of a phone location unit (PLU) in a defined volume, in accordance with embodiments of the present invention. Step **302C** includes measuring by a PLU, the RSSI of RF signals from a mobile communication device received at a plurality of antennas in a defined volume. Step **304C** includes measuring by a PLU, the angle or phase of arrival and/or the time of arrival of RF signals from a mobile communication device received at a plurality of antennas in a defined volume. According to some embodiments, the PLU positioning method may comprise only one of those steps or both. When both occur, they may occur simultaneously or can be sequential steps. According to some embodiments, only one of those steps **302C**, **304C** may be performed (e.g., in accordance with the HW capabilities of the PLU). The measurements are processed by a PLU **310C** leading to step **320C** which includes determining the position of the at least one mobile communication device relative to a frame of reference of the defined volume.

Step **332C** may include obtaining the reading from a non-RF sensor located on one of a plurality of the mobile communication devices within the defined volume. Step **332C** may be repeated over time to yield time series **342C** of the readings. Step **334C** may include obtaining a reading from a non-RF sensor (i.e., a non-RF sensor does not use RF signals for its sensing operation but can use RF signals to communicate and transfer its measurements to another device) external to the plurality of the mobile communication devices within the defined volume. Step **334C** may be repeated over time to yield time series **344C** of the readings. Step **336C** may include obtaining a reading from a non-RF sensor located in the Phone Location Unit. Step **336C** may be repeated over time to yield time series **346C** of the readings these steps may occur simultaneously or in any order, wherein in some cases, only a subset of them may occur.

Some or all of the readings of the sensors in steps **332C, 334C,** and **336C,** together with their respective time series **342C, 344C,** and **346C** and the mobile communication device position as calculated by the PLU at step **320C**, may be fed into a classifier **340C**, leading to step **350C** which includes classifying the mode of calibration or maintenance event of the PLU into one of a plurality of predefined modes of calibration or maintenance events.

According to some embodiments of the present invention, the inventors have discovered that while sensor fusion of the non-RF sensors can be used in order to improve the accuracy of the positioning of the mobile communication device within the volume, the sensor fusion can also be used together with the positioning of the PLU in order to classify the mode of calibration of maintenance event of the PLU into one of a plurality of predefined calibration or maintenance events. This can be done either by classic classifiers or by using machine learning techniques that involve training a model with datasets.

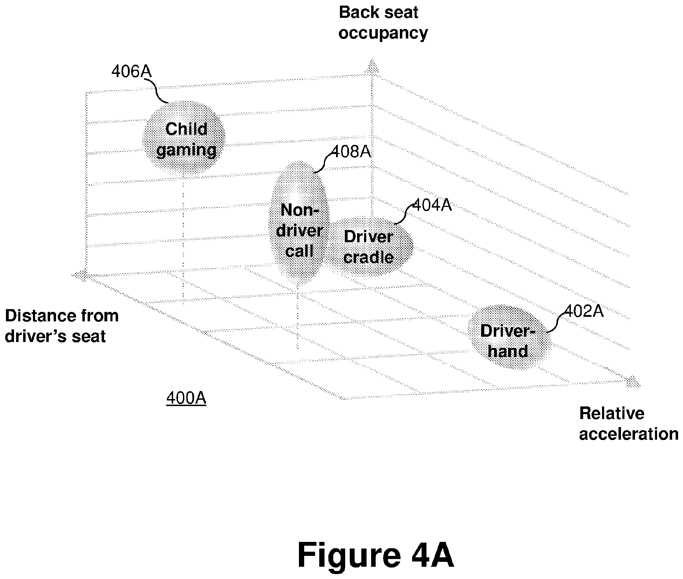

**Figure 4A** is a graph showing an implementation of an N dimensions classifier in accordance with some embodiments of the present invention. Multi-dimensional sensor space **400A** denotes the sensor measurement space in which readings of the location from the PLU (e.g., in the form of a vector denoting distance from the driver's canopy) as well as other sensor readings. By way of a non-limiting example, one further dimension may denote relative acceleration measured by differential IMU readings between an IMU on the mobile communication device and an IMU on the PLU. A further dimension may be pressure denoting the level of pressure applied on the back seats of a vehicle. It is understood that many more dimensions in the multi-dimensional sensors space **400A** may be used and calculated.

In accordance with some embodiments of the present invention, following a training session of datasets associated with measurements from relevant sensors, portions of the multi-dimensional sensors space **400A** can be allocated and designated as specific use cases and modes of operation associated with one or more mobile communication devices within the volume.

For example, the portion of the multi-dimensional sensors space **400A** where the distance from the driver's canopy is short, there is no pressure coming from the back seat, and no relative acceleration of the mobile communication device may infer that the driver's phone is held in a cradle **404A**. The same readings but with a high level of relative acceleration of the mobile communication device infer that the driver's phone is handheld **402A**.

Similarly, a high level of pressure at the back seat with a high level of acceleration and a long distance from the driver's canopy may infer that the phone is being held by a child in gaming mode **406A**. Less pressure and less acceleration may infer a non-driver at an on-call mode **408A**.

It is understood that many more modes of operation may be mapped to the multi-dimensional sensors space **400A** having multiple sensor dimensions and some of the portions may be overlapping requiring making classification decisions based on more parameters and other sensor readings.

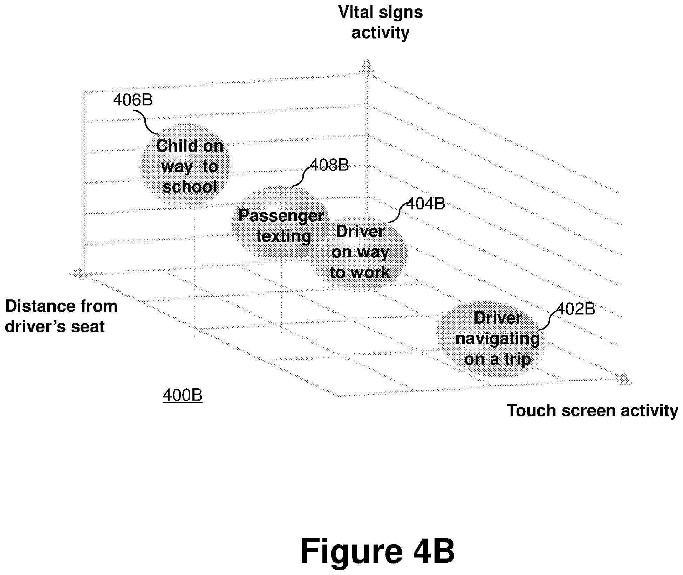

**Figure 4B** is a graph showing an implementation of an N dimensions classifier in accordance with some embodiments of the present invention. Multi-dimensional space **400B** denotes the sensor measurement space in which readings of the location from the PLU (e.g., in the form of a vector denoting distance from the driver's canopy) as well as other sensor readings. By way of a non-limiting example, one further dimension may be a touch screen sensor denoting the level of activity recorded by the touch screens of the mobile communication devices. Yet a further dimension may be vital signs sensors such as heart rate sensors embedded in the mobile communication device. It is understood that many more dimensions in the multi-dimensional sensors space **400B** may be used and calculated.

In accordance with some embodiments of the present invention, following a training session of datasets associated with measurements time series from relevant sensors, portions of the multi-dimensional sensors space **400B** can be allocated and designated as specific use cases and types of interaction events associated with the one or more mobile communication devices within the volume.

For example, the portion of the multi-dimensional sensors space **400B** where the distance from the driver's canopy is short, there is little activity of vital signs, and no touch screen activity of the mobile communication device may infer that the driver is on his or her way to work with little distraction **404B.** The same readings but with a high level of touch screen activity of the mobile communication device infer that the driver may be navigating, possibly on a trip **402B.** In order to validate these classifications, the time series of the GPS readings of the journey of the vehicle may be used to check re-reoccurring journeys.

Similarly, a level of vital signs outside a certain threshold or limit combined with a medium level of touch screen activity and a long distance from the driver's canopy may infer that the phone is being held by a child on his or her way to school **406B.** Lower activity of vital signs may infer a passenger engaged in texting **408B.**

It is understood that many more types of interaction events may be mapped to a multi-dimensional sensors space **400B** having multiple sensor dimensions and some of the portions may be overlapping requiring making classification decisions based on more parameters and other sensor readings. Repeating the measurements and using time series may significantly increase the ability to detect trends in the user activity as well as classify the profile of the human using the mobile communication device.

It is further understood that some embodiments of the present invention may be embodied in the form of a system, a method, or a computer program product. Similarly, some embodiments may be embodied as hardware, software, or a combination of both. Some embodiments may be embodied as a computer program product saved on one or more non-transitory computer-readable medium (or mediums) in the form of computer-readable program code embodied thereon. Such non-transitory computer-readable medium may include instructions that when executed cause a processor to execute method steps in accordance with embodiments. In some embodiments, the instructions stored on the computer-readable medium may be in the form of an installed application and in the form of an installation package.

Such instructions may be, for example, loaded by one or more processors and get executed. For example, the computer-readable medium may be a non-transitory computer-readable storage medium. A non-transitory computer-readable storage medium may be, for example, an electronic, optical, magnetic, electromagnetic, infrared, or semiconductor system, apparatus, device, or any combination thereof.

Computer program code may be written in any suitable programming language. The program code may execute on a single computer system, or on a plurality of computer systems.

One skilled in the art will realize the invention may be embodied in other specific forms whereby the scope of protection sought is delimited by the appending claims.

The foregoing embodiments are therefore to be considered in all respects illustrative rather than limiting of the invention described herein. The scope of the invention is thus indicated by the appended claims, rather than by the foregoing description, and all changes that come within the meaning and range of equivalency of the claims are therefore intended to be embraced therein.

In the foregoing detailed description, numerous specific details are set forth in order to provide an understanding of the invention. However, it will be understood by those skilled in the art that the invention can be practiced without these specific details. In other instances, well-known methods, procedures, and components, modules, units, and/or circuits have not been described in detail so as not to obscure the invention. Some features or elements described with respect to one embodiment can be combined with features or elements described with respect to other embodiments.

## Claims

1. A method of classifying an operational mode of at least one of a plurality of communication devices or an event related to communication therebetween, within a defined volume, wherein said communication devices comprise at least one phone location unit "PLU" and at least one mobile communication device, wherein inside the defined volume there is at least one person interacting with the at least one mobile communication device, the method comprising:
determining a position of the at least one mobile communication device relative to a frame of reference of the defined volume, based on at least one of: angle or phase of arrival, time of flight, or received intensity of radio frequency "RF" signals transmitted by the at least one mobile communication device and received by the PLU located within the defined volume and comprising a transceiver and antennas and further configured to wirelessly communicate with the at least one mobile communication device;
obtaining at least one sensor measurement related to the at least one mobile communication device, from a sensor located on at least one of: the at least one mobile communication device, within the defined volume, or outside of the defined volume; and
using a computer processor to classify the operational mode of at least one of the communication devices or an event related to communication therebetween, into one of a plurality of predefined operational modes or events, based on said position and the at least one sensor measurement,
wherein the defined volume is a vehicle and wherein said operational mode or said event comprises at least one of: a mode of operation of the at least one mobile communication device, a mode of calibration of the PLU, a maintenance event of the phone location unit and, a type of interaction event between said person and the at least one mobile communication device,
wherein the classification by the computer processor is carried out by analyzing gaps between at least one location of the mobile communication device as estimated by the PLU and at least one location of the mobile communication device derived from measurements of the at least one sensor, and assigning a respective likelihood, to at least one mode of calibration or maintenance event selected from a plurality of modes of calibration or maintenance events, and
wherein the mode of calibration further comprises a self-calibration mode in which the PLU is capable of carrying out a calibration session automatically.

2. The method according to claim 1, wherein the defined volume is a vehicle and wherein said operational mode or said event type comprises a type of an interaction event between said person and the at least one mobile communication device and wherein the type of interaction event further comprises obtaining information about the at least one person and repeating the obtaining over time, to yield at least one time series of sensor readings.

3. The method according to claim 1, wherein the obtaining the sensor measurement related to the at least one mobile communication device is from at least two inertial measurement units "IMU", wherein at least one of the IMU is located on the mobile communication device and at least one of the IMUs is located on the vehicle, and wherein a differential measurement of the IMU is used to deduce internal movement of the at least one mobile communication device within the vehicle.

4. The method according to claim 1, wherein the type of interaction event comprises at least one of: no engagement, audio engagement, visual engagement, audio-visual engagement; routine activity; and non-routine activity.

5. The method according to claim 4, wherein the position of the mobile communication unit within the defined volume is further determined to be in the vehicle's driver area, wherein the obtaining at least one sensor measurement related to the at least one mobile communication device is from a motion sensor, said sensor providing information related to the vehicle's speed and wherein the vehicle's speed is factored in classifying the likelihood of the type of interaction event, wherein for a mobile communication device located in the driver's area, a higher speed infers a higher probability of a no engagement type of interaction event.

6. The method according to claim 3, wherein the obtaining at least one sensor measurement related to the at least one mobile communication device is from a vital signs sensor, said vital signs sensor providing information on the level of physiological activity of the at least one person using the mobile communication device, and wherein the level of vital signs is factored in classifying the likelihood of the type of interaction event, wherein a level of vital signs outside a certain threshold or limit infers a higher probability of an audio-visual engagement.

7. The method according to claim 4, wherein the vehicle comprises at least one seat with a pressure sensor indicating that said seat is occupied by the at least one person, and wherein the obtaining at least one sensor measurement related to the at least one mobile communication device is from a seat pressure sensor and wherein the seat pressure sensor indication is factored in classifying the identity of the person, wherein a positive indication of a seat pressure sensor infers a higher probability of a use of a mobile communicating device by the at least one person occupying said seat.

8. The method according to claim 3, wherein the at least one person is sensed by at least one vital signs sensor, and wherein the obtaining at least one sensor measurement related to the at least one mobile communication device is from at least one vital signs sensor, and wherein a vital signs measurement is factored in classifying the likelihood of the type of interaction event, wherein a level of vital signs outside a certain threshold or limit infers a higher probability of an engaged type of interaction event.

9. The method according to claim 1, wherein the classification by the computer processor is carried out by assigning to the at least one mobile communication device a respective likelihood, to at least one mode of operation selected from a plurality of modes of operation.

10. The method according to claim 9, wherein the modes of operation comprise at least one of: idle, on-call, sending a text message, audio input, touch screen in use, and streaming data.

11. The method according to claim 9, wherein the position of the mobile communication unit within the defined volume is further determined to be in the vehicle's driver area, wherein the obtaining at least one sensor measurement related to the at least one mobile communication device is from a motion sensor, said sensor providing information related to the vehicle's speed and wherein the vehicle's speed is factored in classifying the likelihood of the mode of operation, wherein for a mobile communication device located in the driver's area, a higher speed infers a higher probability of an idle mode of operation.

12. The method according to claim 9, wherein the obtaining at least one sensor measurement related to the at least one mobile communication device is from a proximity sensor, said proximity sensor providing information on the proximity between the at least one mobile communication device and the at least one person, and wherein the proximity is factored in classifying the likelihood of the mode of operation, wherein a closer proximity infers a higher probability of an on-call mode of operation.

13. The method according to claim 9, wherein the vehicle comprises at least one seat with a pressure sensor indicating that said seat is occupied by the at least one person, and wherein the obtaining at least one sensor measurement related to the at least one mobile communication device is from a seat pressure sensor and wherein the seat pressure sensor indication is factored in classifying the likelihood of the mode of operation, wherein a positive indication of a seat pressure sensor infers a higher probability of a use of a mobile communicating device by the at least one person occupying that seat.

14. The method according to claim 9, wherein the at least one person is sensed by at least one vital signs sensor, and wherein the obtaining at least one sensor measurement related to the at least one mobile communication device is from at least one vital signs sensor, and wherein a vital signs measurement is factored in classifying the likelihood of the mode of operation, wherein a level of vital signs outside a certain threshold or limit infers a higher probability of a non-idle mode of operation of the at least one mobile communicating device.

15. The method according to claim 1, wherein the phone location unit is further connected to a server, and wherein the mode of calibration or maintenance event comprises at least one of: an automatic recalibration performed by said phone location unit, an automatic recalibration managed by said server, wherein said server transfers calibration data to the phone location unit, an assisted recalibration involving a user or a service person, the installation of a new software on the phone location unit, the replacement of a faulty module, the reinstallation of one or more mislocated antennas, the reconnection of a detached antenna and, changes in the volume.

## Patentansprüche

1. Verfahren zum Klassifizieren eines Betriebsmodus mindestens einer von einer Vielzahl von Kommunikationsvorrichtungen oder eines Ereignisses in Bezug auf die Kommunikation zwischen diesen innerhalb eines definierten Volumens, wobei die Kommunikationsvorrichtungen mindestens eine Telefonortungseinheit (phone location unit - "PLU") und mindestens eine mobile Kommunikationsvorrichtung umfassen, wobei sich innerhalb des definierten Volumens mindestens eine Person befindet, die mit der mindestens einen mobilen Kommunikationsvorrichtung interagiert, wobei das Verfahren Folgendes umfasst:
Bestimmen einer Position der mindestens einen mobilen Kommunikationsvorrichtung relativ zu einem Bezugsrahmen des definierten Volumens, basierend auf mindestens einem von: Ankunftswinkel oder -phase, Laufzeit oder empfangene Intensität von Hochfrequenz("HF")-Signalen, die durch die mindestens eine mobile Kommunikationsvorrichtung übertragen und durch die PLU, die sich innerhalb des definierten Volumens befindet und einen Transceiver und Antennen umfasst und ferner dazu konfiguriert ist, drahtlos mit der mindestens einen mobilen Kommunikationsvorrichtung zu kommunizieren, empfangen werden;
Erlangen mindestens einer Sensormessung in Bezug auf die mindestens eine mobile Kommunikationsvorrichtung von einem Sensor, der sich an mindestens einem von Folgendem befindet: der mindestens einen mobilen Kommunikationsvorrichtung innerhalb des definierten Volumens oder außerhalb des definierten Volumens; und
Verwenden eines Computerprozessors zum Klassifizieren des Betriebsmodus mindestens einer von den Kommunikationsvorrichtungen oder eines Ereignisses in Bezug auf die Kommunikation zwischen diesen in einen von einer Vielzahl von vordefinierten Betriebsmodi oder Ereignissen, basierend auf der Position und der mindestens einen Sensormessung,
wobei das definierte Volumen ein Fahrzeug ist und wobei der Betriebsmodus oder das Ereignis mindestens eines von Folgendem umfasst: einem Betriebsmodus der mindestens einen mobilen Kommunikationsvorrichtung, einem Kalibrierungsmodus der PLU, einem Wartungsereignis der Telefonortungseinheit und einer Art von Interaktionsereignis zwischen der Person und der mindestens einen mobilen Kommunikationsvorrichtung,
wobei das Klassifizieren durch den Computerprozessor derart ausgeführt wird, dass Lücken zwischen mindestens einem durch die PLU geschätzten Standort der mobilen Kommunikationsvorrichtung und mindestens einem aus Messungen des mindestens einen Sensors abgeleiteten Standort der mobilen Kommunikationsvorrichtung analysiert werden und eine jeweilige Wahrscheinlichkeit mindestens einem Kalibrierungsmodus oder Wartungsereignis, ausgewählt aus einer Vielzahl von Kalibrierungsmodi oder Wartungsereignissen, zugeordnet wird, und
wobei der Kalibrierungsmodus ferner einen Selbstkalibrierungsmodus umfasst, in dem die PLU in der Lage ist, eine Kalibrierungssitzung automatisch auszuführen.

2. Verfahren nach Anspruch 1, wobei das definierte Volumen ein Fahrzeug ist und wobei der Betriebsmodus oder die Ereignisart eine Art eines Interaktionsereignisses zwischen der Person und der mindestens einen mobilen Kommunikationsvorrichtung umfasst und wobei die Art des Interaktionsereignisses ferner das Erlangen von Informationen über die mindestens eine Person und das Wiederholen des Erlangens über die Zeit, um mindestens eine Zeitreihe von Sensormesswerten zu erlangen, umfasst.

3. Verfahren nach Anspruch 1, wobei das Erlangen der Sensormessung in Bezug auf die mindestens eine mobile Kommunikationsvorrichtung von mindestens zwei Inertialmesseinheiten (inertial measurement units - "IMU") erfolgt, wobei sich mindestens eine der IMU an der mobilen Kommunikationsvorrichtung befindet und sich mindestens eine der IMUs an dem Fahrzeug befindet und wobei eine Differenzmessung der IMU verwendet wird, um eine interne Bewegung der mindestens einen mobilen Kommunikationsvorrichtung innerhalb des Fahrzeugs abzuleiten.

4. Verfahren nach Anspruch 1, wobei die Art des Interaktionsereignisses mindestens eines von Folgendem umfasst: keine Handlung, Audio-Handlung, visuelle Handlung, audiovisuelle Handlung; Routineaktivität; und Nicht-Routineaktivität.

5. Verfahren nach Anspruch 4, wobei die Position der mobilen Kommunikationseinheit innerhalb des definierten Volumens ferner so bestimmt wird, dass sie sich in dem Fahrerbereich des Fahrzeugs befindet, wobei das Erlangen mindestens einer Sensormessung in Bezug auf die mindestens eine mobile Kommunikationsvorrichtung von einem Bewegungssensor stammt, wobei der Sensor Informationen in Bezug auf die Geschwindigkeit des Fahrzeugs bereitstellt und wobei die Geschwindigkeit des Fahrzeugs bei dem Klassifizieren der Wahrscheinlichkeit der Art des Interaktionsereignisses berücksichtigt wird, wobei für eine mobile Kommunikationsvorrichtung, die sich in dem Fahrerbereich befindet, eine höhere Geschwindigkeit auf eine höhere Wahrscheinlichkeit eines Interaktionsereignisses von der Art "keine Handlung" hinweist.

6. Verfahren nach Anspruch 3, wobei das Erlangen mindestens einer Sensormessung in Bezug auf die mindestens eine mobile Kommunikationsvorrichtung von einem Vitalparametersensor stammt, wobei der Vitalparametersensor Informationen über das Niveau der physiologischen Aktivität der mindestens einen Person bereitstellt, die die mobile Kommunikationsvorrichtung verwendet, und wobei das Niveau der Vitalparameter bei dem Klassifizieren der Wahrscheinlichkeit der Art des Interaktionsereignisses berücksichtigt wird, wobei ein Niveau der Vitalparameter außerhalb eines bestimmten Schwellenwerts oder einer bestimmten Grenze auf eine höhere Wahrscheinlichkeit einer audiovisuellen Handlung hinweist.

7. Verfahren nach Anspruch 4, wobei das Fahrzeug mindestens einen Sitz mit einem Drucksensor umfasst, der angibt, dass der Sitz durch die mindestens eine Person besetzt ist, und wobei das Erlangen mindestens einer Sensormessung in Bezug auf die mindestens eine mobile Kommunikationsvorrichtung von einem Sitzdrucksensor stammt und wobei die Sitzdrucksensorangabe bei dem Klassifizieren der Identität der Person berücksichtigt wird, wobei eine positive Angabe eines Sitzdrucksensors auf eine höhere Wahrscheinlichkeit einer Verwendung einer mobilen Kommunikationsvorrichtung durch die mindestens eine Person, die den Sitz belegt, hinweist.

8. Verfahren nach Anspruch 3, wobei die mindestens eine Person durch mindestens einen Vitalparametersensor erfasst wird und wobei das Erlangen mindestens einer Sensormessung in Bezug auf die mindestens eine mobile Kommunikationsvorrichtung von mindestens einem Vitalparametersensor stammt und wobei eine Vitalparametermessung bei dem Klassifizieren der Wahrscheinlichkeit der Art des Interaktionsereignisses berücksichtigt wird, wobei ein Niveau der Vitalparameter außerhalb eines bestimmten Schwellenwerts oder einer bestimmten Grenze auf eine höhere Wahrscheinlichkeit einer aktiven Art von Interaktionsereignis hinweist.

9. Verfahren nach Anspruch 1, wobei das Klassifizieren durch den Computerprozessor ausgeführt wird, indem der mindestens einen mobilen Kommunikationsvorrichtung eine jeweilige Wahrscheinlichkeit zugeordnet wird, und zwar zu mindestens einem Betriebsmodus, der aus einer Vielzahl von Betriebsmodi ausgewählt wird.

10. Verfahren nach Anspruch 9, wobei die Betriebsmodi mindestens einen von Folgendem umfassen: Standby, Bereitschaft, Senden einer Textnachricht, Audioeingang, verwendeter Touchscreen und Streamen von Daten.

11. Verfahren nach Anspruch 9, wobei die Position der mobilen Kommunikationseinheit innerhalb des definierten Volumens ferner so bestimmt wird, dass sie sich in dem Fahrerbereich des Fahrzeugs befindet, wobei das Erlangen mindestens einer Sensormessung in Bezug auf die mindestens eine mobile Kommunikationsvorrichtung von einem Bewegungssensor stammt, wobei der Sensor Informationen in Bezug auf die Geschwindigkeit des Fahrzeugs bereitstellt und wobei die Geschwindigkeit des Fahrzeugs bei dem Klassifizieren der Wahrscheinlichkeit des Betriebsmodus berücksichtigt wird, wobei für eine mobile Kommunikationsvorrichtung, die sich in dem Fahrerbereich befindet, eine höhere Geschwindigkeit auf eine höhere Wahrscheinlichkeit eines Standby-Betriebsmodus hinweist.

12. Verfahren nach Anspruch 9, wobei das Erlangen mindestens einer Sensormessung in Bezug auf die mindestens eine mobile Kommunikationsvorrichtung von einem Näherungssensor stammt, wobei der Näherungssensor Informationen über die Nähe zwischen der mindestens einen mobilen Kommunikationsvorrichtung und der mindestens einen Person bereitstellt und wobei die Nähe bei dem Klassifizieren der Wahrscheinlichkeit des Betriebsmodus berücksichtigt wird, wobei eine größere Nähe auf eine höhere Wahrscheinlichkeit eines Bereitschaftsbetriebsmodus hinweist.

13. Verfahren nach Anspruch 9, wobei das Fahrzeug mindestens einen Sitz mit einem Drucksensor umfasst, der angibt, dass der Sitz durch die mindestens eine Person besetzt ist, und wobei das Erlangen mindestens einer Sensormessung in Bezug auf die mindestens eine mobile Kommunikationsvorrichtung von einem Sitzdrucksensor stammt und wobei die Sitzdrucksensorangabe bei dem Klassifizieren der Wahrscheinlichkeit des Betriebsmodus berücksichtigt wird, wobei eine positive Angabe eines Sitzdrucksensors auf eine höhere Wahrscheinlichkeit einer Verwendung einer mobilen Kommunikationsvorrichtung durch die mindestens eine Person, die diesen Sitz belegt, hinweist.

14. Verfahren nach Anspruch 9, wobei die mindestens eine Person durch mindestens einen Vitalparametersensor erfasst wird und wobei das Erlangen mindestens einer Sensormessung in Bezug auf die mindestens eine mobile Kommunikationsvorrichtung von mindestens einem Vitalparametersensor stammt und wobei eine Vitalparametermessung bei dem Klassifizieren der Wahrscheinlichkeit des Betriebsmodus berücksichtigt wird, wobei ein Niveau der Vitalparameter außerhalb eines bestimmten Schwellenwerts oder einer bestimmten Grenze auf eine höhere Wahrscheinlichkeit eines Nicht-Standby-Betriebsmodus der mindestens einen mobilen Kommunikationsvorrichtung hinweist.

15. Verfahren nach Anspruch 1, wobei die Telefonortungseinheit ferner mit einem Server verbunden ist und wobei der Kalibrierungsmodus oder das Wartungsereignis mindestens eines von Folgendem umfasst: einer automatischen Neukalibrierung, die durch die Telefonortungseinheit durchgeführt wird, einer automatischen Neukalibrierung, die durch den Server verwaltet wird, wobei der Server Kalibrierungsdaten an die Telefonortungseinheit überträgt, einer assistierten Neukalibrierung, an der ein Benutzer oder eine Serviceperson beteiligt ist, der Installation einer neuen Software auf der Telefonortungseinheit, dem Austausch eines defekten Moduls, der Neuinstallation einer oder mehrerer falsch positionierter Antennen, der Neuverbindung einer abgelösten Antenne und Änderungen der Lautstärke.

## Revendications

1. Procédé de classification d'un mode opérationnel d'au moins un parmi une pluralité de dispositifs de communication ou d'un événement lié à la communication entre ceux-ci, à l'intérieur d'un volume défini, où lesdits dispositifs de communication comprennent au moins une unité de localisation de téléphone « PLU » et au moins un dispositif de communication mobile, où, à l'intérieur du volume défini, il y a au moins une personne interagissant avec l'au moins un dispositif de communication mobile, le procédé comprenant :
la détermination d'une position de l'au moins un dispositif de communication mobile par rapport à un cadre de référence du volume défini, sur la base d'au moins un élément parmi : l'angle ou la phase d'arrivée, le temps de vol ou l'intensité reçue de signaux radiofréquence « RF » transmis par l'au moins un dispositif de communication mobile et reçus par le PLU situé à l'intérieur du volume défini et comprenant un émetteur-récepteur et des antennes et configuré en outre pour communiquer sans fil avec l'au moins un dispositif de communication mobile ;
l'obtention d'au moins une mesure de capteur liée à l'au moins un dispositif de communication mobile, à partir d'un capteur situé sur au moins un élément parmi : l'au moins un dispositif de communication mobile, à l'intérieur du volume défini, ou à l'extérieur du volume défini ; et
l'utilisation d'un processeur informatique pour classer le mode opérationnel d'au moins un des dispositifs de communication ou d'un événement lié à la communication entre ceux-ci, dans l'un d'une pluralité de modes opérationnels ou d'événements prédéfinis, sur la base de ladite position et de l'au moins une mesure de capteur,
où le volume défini est un véhicule et où ledit mode opérationnel ou ledit événement comprend au moins un élément parmi : un mode de fonctionnement de l'au moins un dispositif de communication mobile, un mode d'étalonnage du PLU, un événement de maintenance de l'unité de localisation de téléphone et un type d'événement d'interaction entre ladite personne et l'au moins un dispositif de communication mobile,
où la classification par le processeur informatique est effectuée en analysant les écarts entre au moins une localisation du dispositif de communication mobile telle qu'estimée par le PLU et au moins une localisation du dispositif de communication mobile dérivée de mesures de l'au moins un capteur, et en attribuant une probabilité respective à au moins un mode d'étalonnage ou événement de maintenance sélectionné parmi une pluralité de modes d'étalonnage ou d'événements de maintenance, et
où le mode d'étalonnage comprend en outre un mode d'auto-étalonnage dans lequel le PLU est capable d'effectuer automatiquement une session d'étalonnage.

2. Procédé selon la revendication 1, où le volume défini est un véhicule et où ledit mode opérationnel ou ledit type d'événement comprend un type d'un événement d'interaction entre ladite personne et l'au moins un dispositif de communication mobile, et où le type d'événement d'interaction comprend en outre l'obtention d'informations sur l'au moins une personne et la répétition de l'obtention au fil du temps, afin de produire au moins une série temporelle de lectures de capteur.

3. Procédé selon la revendication 1, où l'obtention de la mesure de capteur liée à l'au moins un dispositif de communication mobile provient d'au moins deux unités de mesure inertielle « IMU », où au moins une des IMU est située sur le dispositif de communication mobile et au moins une des IMU est située sur le véhicule, et où une mesure différentielle de l'IMU est utilisée pour déduire le mouvement interne de l'au moins un dispositif de communication mobile à l'intérieur du véhicule.

4. Procédé selon la revendication 1, où le type d'événement d'interaction comprend au moins un élément parmi : une absence d'engagement, un engagement audio, un engagement visuel, un engagement audiovisuel ; une activité routinière ; et une activité non routinière.

5. Procédé selon la revendication 4, où la position de l'unité de communication mobile à l'intérieur du volume défini est en outre déterminée comme étant dans la zone du conducteur du véhicule, où l'obtention d'au moins une mesure de capteur liée à l'au moins un dispositif de communication mobile provient d'un capteur de mouvement, ledit capteur fournissant des informations liées à la vitesse du véhicule et où la vitesse du véhicule est prise en compte dans la classification de la probabilité du type d'événement d'interaction, où, pour un dispositif de communication mobile situé dans la zone du conducteur, une vitesse plus élevée implique une probabilité plus élevée d'un événement d'interaction de type absence d'engagement.

6. Procédé selon la revendication 3, où l'obtention d'au moins une mesure de capteur liée à l'au moins un dispositif de communication mobile provient d'un capteur de signes vitaux, ledit capteur de signes vitaux fournissant des informations sur le niveau d'activité physiologique de l'au moins une personne utilisant le dispositif de communication mobile, et où le niveau de signes vitaux est pris en compte dans la classification de la probabilité du type d'événement d'interaction, où un niveau de signes vitaux en dehors d'un certain seuil ou d'une certaine limite implique une probabilité plus élevée d'un engagement audiovisuel.

7. Procédé selon la revendication 4, où le véhicule comprend au moins un siège avec un capteur de pression indiquant que ledit siège est occupé par l'au moins une personne, et où l'obtention d'au moins une mesure de capteur liée à l'au moins un dispositif de communication mobile provient d'un capteur de pression de siège et où l'indication de capteur de pression de siège est prise en compte dans la classification de l'identité de la personne, où une indication positive d'un capteur de pression de siège implique une probabilité plus élevée d'une utilisation d'un dispositif de communication mobile par l'au moins une personne occupant ledit siège.

8. Procédé selon la revendication 3, où l'au moins une personne est détectée par au moins un capteur de signes vitaux, et où l'obtention d'au moins une mesure de capteur liée à l'au moins un dispositif de communication mobile provient d'au moins un capteur de signes vitaux, et où une mesure de signes vitaux est prise en compte dans la classification de la probabilité du type d'événement d'interaction, où un niveau de signes vitaux en dehors d'un certain seuil ou d'une certaine limite implique une probabilité plus élevée d'un événement d'interaction de type engagé.

9. Procédé selon la revendication 1, où la classification par le processeur informatique est effectuée en attribuant à l'au moins un dispositif de communication mobile une probabilité respective, à au moins un mode de fonctionnement sélectionné parmi une pluralité de modes de fonctionnement.

10. Procédé selon la revendication 9, où les modes de fonctionnement comprennent au moins un parmi : la veille, l'attente, l'envoi d'un message texte, l'entrée audio, l'utilisation de l'écran tactile et la diffusion de données.

11. Procédé selon la revendication 9, où la position de l'unité de communication mobile à l'intérieur du volume défini est en outre déterminée comme étant dans la zone du conducteur du véhicule, où l'obtention d'au moins une mesure de capteur liée à l'au moins un dispositif de communication mobile provient d'un capteur de mouvement, ledit capteur fournissant des informations liées à la vitesse du véhicule et où la vitesse du véhicule est prise en compte dans la classification de la probabilité du mode de fonctionnement, où, pour un dispositif de communication mobile situé dans la zone du conducteur, une vitesse plus élevée implique une probabilité plus élevée d'un mode de fonctionnement de veille.

12. Procédé selon la revendication 9, où l'obtention d'au moins une mesure de capteur liée à l'au moins un dispositif de communication mobile provient d'un capteur de proximité, ledit capteur de proximité fournissant des informations sur la proximité entre l'au moins un dispositif de communication mobile et l'au moins une personne, et où la proximité est prise en compte dans la classification de la probabilité du mode de fonctionnement, où une proximité plus proche implique une probabilité plus élevée d'un mode de fonctionnement d'attente.

13. Procédé selon la revendication 9, où le véhicule comprend au moins un siège avec un capteur de pression indiquant que ledit siège est occupé par l'au moins une personne, et où l'obtention d'au moins une mesure de capteur liée à l'au moins un dispositif de communication mobile provient d'un capteur de pression de siège et où l'indication du capteur de pression de siège est prise en compte dans la classification de la probabilité du mode de fonctionnement, où une indication positive d'un capteur de pression de siège implique une probabilité plus élevée d'une utilisation d'un dispositif de communication mobile par l'au moins une personne occupant ce siège.

14. Procédé selon la revendication 9, où l'au moins une personne est détectée par au moins un capteur de signes vitaux, et où l'obtention d'au moins une mesure de capteur liée à l'au moins un dispositif de communication mobile provient d'au moins un capteur de signes vitaux, et où une mesure de signes vitaux est prise en compte dans la classification de la probabilité du mode de fonctionnement, où un niveau de signes vitaux en dehors d'un certain seuil ou d'une certaine limite implique une probabilité plus élevée d'un mode de fonctionnement non-veille de l'au moins un dispositif de communication mobile.

15. Procédé selon la revendication 1, où l'unité de localisation de téléphone est en outre connectée à un serveur, et où le mode d'étalonnage ou de maintenance comprend au moins un élément parmi : un réétalonnage automatique effectué par ladite unité de localisation de téléphone, un réétalonnage automatique géré par ledit serveur, où ledit serveur transfère des données d'étalonnage à l'unité de localisation de téléphone, un réétalonnage assisté impliquant un utilisateur ou un technicien de maintenance, l'installation d'un nouveau logiciel sur l'unité de localisation de téléphone, le remplacement d'un module défectueux, la réinstallation d'une ou plusieurs antennes mal positionnées, la reconnexion d'une antenne détachée et des modifications du volume.
